(19) Europäisches Patentamt
European Patent Office
Office européen des brevets

(11) EP 4 448 617 B1

(12) **EUROPEAN PATENT SPECIFICATION**

(45) Date of publication and mention of the grant of the patent:
**13.08.2025 Bulletin 2025/33**

(21) Application number: **22830729.4**

(22) Date of filing: **06.12.2022**

(51) International Patent Classification (IPC):
***C08G 65/24*** *(2006.01)* ***C08G 65/26*** *(2006.01)*
***C08G 65/333*** *(2006.01)* ***C11D 1/62*** *(2006.01)*
***C08G 65/337*** *(2006.01)* ***C08L 71/02*** *(2006.01)*
***C08G 81/02*** *(2006.01)* ***C11D 3/37*** *(2006.01)*
***C11D 3/48*** *(2006.01)*

(52) Cooperative Patent Classification (CPC):
(C-Sets available)
**C08G 65/24; C08G 65/2624; C08G 65/33306; C08G 65/337; C08L 71/02; C11D 3/3723; C11D 3/3788; C11D 3/48;** C11D 2111/12; C11D 2111/14 (Cont.)

(86) International application number:
**PCT/EP2022/084536**

(87) International publication number:
**WO 2023/110525 (22.06.2023 Gazette 2023/25)**

(54) **NEW CATIONIC POLYMERS, PROCESS FOR PRODUCING THE SAME FROM POLYUREA DIAMINE CONDENSATES AND ETHER DERIVATIVES, AND USES THEREOF**

KATIONISCHE POLYMERE, VERFAHREN ZU IHRER HERSTELLUNG AUS POLYHARNSTOFFDIAMINKONDENSATEN UND ETHERDERIVATEN SOWIE VERWENDUNGEN DAVON

NOUVEAUX POLYMÈRES CATIONIQUES, LEUR PROCÉDÉ DE PRODUCTION À PARTIR DE CONDENSATS DE POLYURÉE DIAMINE ET DE DÉRIVÉS D'ÉTHER, ET LEURS UTILISATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.12.2021 EP 21215379**

(43) Date of publication of application:
**23.10.2024 Bulletin 2024/43**

(73) Proprietor: **SPECIALTY OPERATIONS FRANCE**
**69003 Lyon (FR)**

(72) Inventors:
- **BZDUCHA, Wojciech**
  **92400 Courbevoie (FR)**
- **ZHOU, Sujandi**
  **Singapore 670466 (SG)**
- **WILSON, David James**
  **60580 Coye-la-Forêt (FR)**

(74) Representative: **Valentino, Cédric**
**Specialty Operations France**
**Intellectual Assets Management (IAM)**
**85 rue des Frères Perret**
**RIC Lyon**
**BP62**
**69192 Saint-Fons (FR)**

(56) References cited:
**WO-A1-2011/148950**
**DE-A1- 102007 027 027**
**US-A1- 2015 218 177**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 448 617 B1

(52) Cooperative Patent Classification (CPC): (Cont.)

C-Sets
**C08L 71/02, C08L 75/04**

## Description

This application claims priority to the application filed on December 17, 2021 in Europe with Nr 21215379.5.

The present invention relates to new cationic polymers, a synthesis process for preparing them from polyurea diamine condensates and bifunctional ether derivatives, notably dihalogeno ether derivatives, and to the use of said new cationic polymers for surface treatment applications including, but not limited to, home and personal care applications as well as industrial and institutional cleaning applications.

BACKGROUND

Cationic polymers obtained by reaction between monourea diamine condensates and dichloroalkyl ethers (notably bis-chloroethyl ethers) are known for their antimicrobial properties on one hand from WO11148950 A1, and for their performance for fixing colors and/or inhibiting the running of colors in laundry formulations on the other hand from US 2009/0005286 A1. Unfortunately, even if their performances are recognized in said applications, such highly cationic polymers are now classified as H410, i.e. very toxic to aquatic life with long lasting effects.

There is thus a need to find new chemical solutions with an improved eco-toxicity profile while preserving or even improving the surface treatment performances. The new chemical solution that is expected in this field would in addition present an improved biodegradability profile compared to already known cationic polymers made from monourea diamine condensates and dichloroalkyl ethers.

BRIEF DESCRIPTION

One aim of the invention is thus to provide a new cationic polymer, that is able to replace existing cationic polymers in all applications they are intended for, notably as hygiene booster agent and dye transfer inhibitor, and that present a good eco-toxicity profile and a better biodegradability compared to existing cationic polymers. The invention further aims at providing a process that allow preparing such new cationic polymers, formulations comprising the same and various uses of said polymers.

To this end, the instant invention provides a new family of polymers, which reveal to provide especially good performances in surface treatment application, notably as hygiene booster agent and dye transfer inhibitor, while being harmless to the environment.

More precisely, according to a first aspect, one subject matter of the instant invention is a new polymer comprising the following repeating unit of formula I:

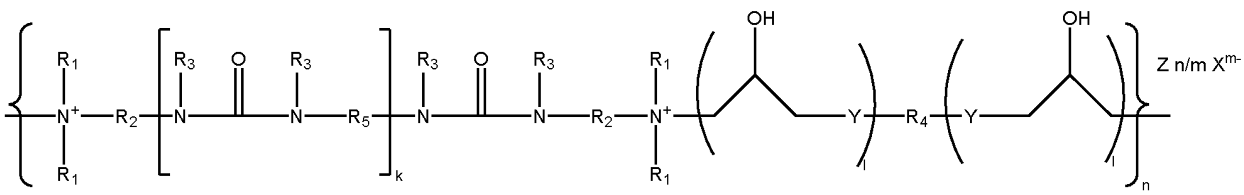

(I)

wherein:

- $R_1$ are each independently a hydrogen atom, a $C_1$ to $C_4$ alkyl or hydroxyalkyl group, or a $C_2$ to $C_4$ alkenyl group;
- $R_2$ are each independently a $C_2$ to $C_{10}$ alkylene group;
- $R_3$ are each independently a hydrogen atom, a $C_1$ to $C_4$ alkyl or hydroxyalkyl group, or a $C_2$ to $C_4$ alkenyl group;
- $R_4$ represents an oxyalkylene group of formula A:

$$(-CHR_6CH_2)_a\text{-}(OCH_2CHR_7)_b\text{-}(OCH_2CHR_8)_c\text{-}(OCH_2CHR_9)_d \qquad (A)$$

wherein

"a" represents 1;
"b" represents an integer of 1 or more;
"c" and "d" represent independently from one another an integer of 0 or more; and
$R_6$, $R_7$, $R_8$ and $R_9$ represent independently from one another a hydrogen atom or a $C_1$ to $C_4$ alkyl group;

- $R_5$ represents an alkylene group, an oxyalkylene group of formula A, a cycloalkylene group, or an arylene group, optionally substituted and/or interrupted by one or more heteroatoms or heteroatom containing groups;
- Y represents an oxygen atom, $-NR_{10}-$ or $-N^+R_{11}R_{12}-$ wherein

  - $R_{10}$ represents a hydrogen atom or a radical deriving from any electrophilic compound present in the reaction mixture during the synthesis process of the polymer and that reacted by alkylation reaction with a secondary amine (Y = -NH-) present on the polymer during its synthesis; and
  - $R_{11}$ and $R_{12}$ represent radicals deriving from any electrophilic compounds present in the reaction mixture during the synthesis process of the polymer and that reacted by successive alkylation reactions with a secondary amine (Y = -NH-) and then a tertiary amine (e.g. Y = $-NR_{11}-$) present on the polymer during its synthesis;

- k represents a positive integer from 1 to 20;
- l represents a positive integer being 0 or 1;
- Z represents a positive integer from 2 to 4;
- n represents a positive integer from 1 to 50
- m represents a positive integer from 1 to 3 and
- X represents an electrophilic group, preferably selected from halogens or sulfates.

The polymers comprising the repeating unit of formula I present a good eco-toxicity profile and a better biodegradability compared to existing cationic polymers.

The polymers comprising the repeating unit of formula I are highly efficacious macromolecular antimicrobials, which is one first advantage, especially since the polymers comprising the repeating unit of formula I do not lead to production of harmful degradation byproducts being resistant to hydrolysis thanks to stable urea functionality when used for home and personal care (HPC) applications at pH different from neutral and being less detrimental to waterways and food supplies in comparison to triclosan (antimicrobial agent commonly used in HPC applications).

There are many factors that influence antimicrobial activity and selectivity of the polymers for use in those applications. Careful tuning of the antimicrobial polymers hydrophilic/hydrophobic balance (amphiphilicity) significantly impacts their activity and selectivity. This can be achieved by the appropriate choice of the alkylating agent to be reacted with the polyurea diamine compound, resulting in new cationic polymers comprising the repeating unit of formula I.

Another subject matter of the invention is thus the preparation process of the above polymers comprising the repeating unit of formula I, said process comprising a step (i) of reacting a compound of formula II:

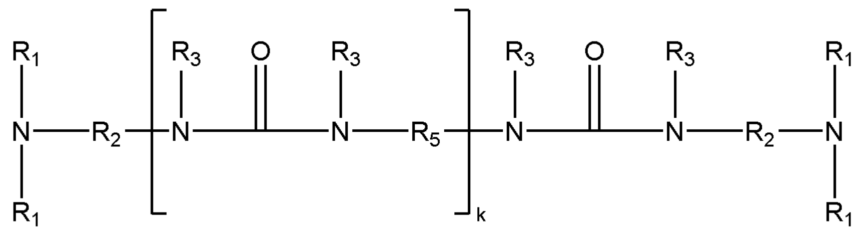

(II)

wherein

- $R_1$ are each independently a hydrogen atom, a $C_1$ to $C_4$ alkyl or hydroxyalkyl group, or a $C_2$ to $C_4$ alkenyl group;
- $R_2$ are each independently a $C_2$ to $C_{10}$ alkylene group;
- $R_3$ are each independently a hydrogen atom, a $C_1$ to $C_4$ alkyl or hydroxyalkyl group, or a $C_2$ to $C_4$ alkenyl group;
- $R_5$ represents an alkylene group, an oxyalkylene group of formula A, a cycloalkylene group, or an arylene group, optionally substituted and/or interrupted by one or more heteroatoms or heteroatom containing groups;
- k represents a positive integer from 1 to 20

with a compound of formula III:

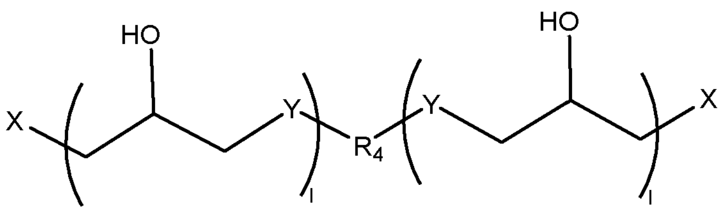

(III)

wherein

- $R_4$ represents an oxyalkylene group of formula A :

$$(-CHR_6CH_2)_a-(OCH_2CHR_7)_b-(OCH_2CHR_8)_c-(OCH_2CHR_9)_d \qquad (A)$$

wherein

"a" represents 1;
"b" represents an integer of 1 or more;
"c" and "d" represent independently from one another an integer of 0 or more; and
$R_6$, $R_7$, $R_8$ and $R_9$ represent independently from one another a hydrogen atom or a $C_1$ to $C_4$ alkyl group;

- Y represents an oxygen atom, $-NR_{10}-$ or $-N^+R_{11}R_{12}-$ wherein
  - $R_{10}$ represents a hydrogen atom or a radical deriving from any electrophilic compound present in the reaction mixture during the synthesis process of the polymer and that reacted by alkylation reaction with a secondary amine (Y = -NH-) present on the polymer during its synthesis; and
  - $R_{11}$ and $R_{12}$ represent radicals deriving from any electrophilic compounds present in the reaction mixture during the synthesis process of the polymer and that reacted by successive alkylation reactions with a secondary amine (Y = -NH-) and then a tertiary amine (e.g. Y = $-NR_{11}-$) present on the polymer during its synthesis;

- I represents a positive integer being 0 or 1;
- X represents an electrophilic group, preferably selected from halogens or sulfates;

thus leading to a polymer comprising repeating units of formula I according to the invention.

The synthesis strategy permits to use inexpensive, commercially available raw materials. The process of the invention is a step-growth polycondensation process that gives access to modest molecular weights thus enabling the polymers to be soluble/processable for subsequent potential post functionalization. Importantly, the process of the invention is perfectly viable in bulk polymerization conditions or in highly concentrated water solutions, which helps to mitigate the cost, and reduce solvent waste. The process of the invention gives total or almost total conversions of the raw materials and gives possibility to eliminate polymer purification and isolation steps.

Another advantage of the invention is that amphoteric structures can be obtained from Jeffamine type based di-halogen alkylating agents. The amine groups (secondary or tertiary) present in the alkylating agent molecule give the possibility to make post polymerization functionalization with anionic alkylating agents. As example, when the sodium monochloroacetate (SMCA) is used for post polymerization functionalization of the residual amine groups of the new cationic polymer comprising repeating units of formula I, cationic and carboxybetaine functionalities can be formed on the same polymer chain backbone. It is known that the carboxybetaine type molecules possess low ecotoxic profile and are very useful in home and personal care (HPC) applications.

A large scope of chemistry is possible for the polymer comprising repeating units of formula I due to newly elaborated alkylating agents. Without being bond by any theory, it is the inventors' understanding that the expected lower ecotoxicity of the new cationic polymers according to the invention is due to lower charge density and due to the polyurea functionality. Indeed, it is believed that lower and fine tunable charge density of the new cationic polymers according to the invention is possible thanks to using new polyurea compounds and/or new alkylating agents of higher molecular weight especially when they are based on PEG and Jeffamine type molecules.

Another advantage of the polymers comprising the repeating unit of formula I is that they can be at least partly bio-based and/or can be produced according to a sustainable production process. Indeed, the urea compound of formula II which is used to produce the polymers comprising the repeating unit of formula I, can be prepared from urea compound of formula V: $NH_2CONH_2$ (V) being largely used in agrochemical applications and being produced according to a sustainable one-step electrochemical method based on the reaction between nitrogen gas and carbon dioxide in the presence of special catalysts as described in the recent publication Chen, C., Zhu, X., Wen, X. et al. Coupling N2 and CO2 in H2O to synthesize urea under ambient conditions. Nat. Chem. 12, 717-724 (2020). https://doi.org/10.1038/s41557-020-0481-9). Also, the compounds of formula III, used to produce the polymers comprising the repeating unit of formula I, may for example be prepared from compounds of formula VI described later on in this text being notably polyethylene glycol and polypropylene glycol or their copolymers which are typically obtained through polymerization of ethylene oxide and propylene oxide, which may be bio-based. Moreover, Bio-based Epichlorohydrin (EPI) (which may constitute the compound of formula VII described later on in this text) is produced by using 100% renewable Glycerin which is a by-product from the transformation of vegetable oils, instead of propylene of petrochemical origin. It is a drop-in for traditional

EPI and offers significant environmental advantages.

Another advantage of the invention is that most of the cationic polymers comprising the repeating unit of formula I can be formulated in surface treatment compositions that contain anionic surfactants. Indeed, the cationic polymers of the invention can be such that they do not precipitate with the said anionic surfactants present in the compositions and hence the intrinsic performance of the cationic polymers of the invention as well as the performance of the compositions (e.g. the cleaning performance) are not adversely affected.

Another advantage of the invention is that the cationic polymers comprising the repeating unit of formula I can be formulated in surface treatment compositions to provide soil release benefits e.g. to fabrics in laundry compositions and to hard surfaces in hard surface cleaning compositions.

Therefore, another subject matter of the invention is the use of the polymers in home and personal care applications, or in industrial and institutional cleaning applications.

A further subject matter of the invention is a formulation comprising:

(i) a polymer comprising the repeating unit of formula I according to the invention or obtained by the process according to the invention;

(ii) and an adjuvant selected from a surfactant and/or a thickening agent.

Various specific advantages and possible embodiments of the invention will now be described in more details.

DETAILED DESCRIPTION

**Definitions**

Throughout the description, including the claims, the term "comprising", "comprising one" or "comprising a" should be understood as being synonymous with the term "comprising at least one", unless otherwise specified. The terms "between" and "from ... to..." should be understood as being inclusive of the limits.

The articles "a", "an" and "the" are used to refer to one or to more than one (i.e., to at least one) of the grammatical object of the article.

It should be noted that in specifying any range of concentration, molar or weight ratio or amount, any particular upper concentration, molar or weight ratio or amount can be associated with any particular lower concentration, molar or weight ratio or amount, respectively.

As used herein, the term "alkyl" means a saturated hydrocarbon radical, which may be straight, branched or cyclic, such as, methyl, ethyl, n-propyl, iso-propyl, n-butyl, sec-butyl, t-butyl, pentyl, n-hexyl, cyclohexyl.

As used herein, the terminology "Cx-Cxx" in reference to any organic group, wherein x and xx are each integers, indicates that the group may contain from x carbon atoms to xx carbon atoms per group.

As used herein, the term "hydroxyalkyl" means an alkyl radical, which is substituted with a hydroxyl groups, such as hydroxymethyl, hydroxyethyl, hydroxypropyl, and hydroxydecyl.

**Structure of the polymer comprising the repeating unit of formula I**

According to the repeating unit of formula I present on the polymer of the invention, it can be seen that when Y is $NR_{10}$, $R_{10}$ can be H or a radical resulting from an alkylation reaction between a secondary amine (Y = -NH-) present on the repeating unit of formula I during the synthesis of the polymer of the invention and any electrophilic compound, preferably a halogenoalkyl or an alkyl sulfate compound, present in the reaction mixture during the synthesis process of the polymer comprising the repeating unit of formula I.

When Y is $-N^*R_{11}R_{12}-$ group, $R_{11}$ and $R_{12}$ are radicals resulting from successive alkylation reactions with first a secondary amine (Y = -NH-) and then tertiary amine (e.g. Y = $-NR_{11}-$) present on the repeating unit of formula I during the synthesis process of the polymer of the invention and any electrophilic compounds, preferably halogenoalkyl or alkyl sulfate compounds, present in the reaction mixture during the synthesis process of the polymer according to the invention. Indeed, the secondary amine (Y= -NH- group), as it is the secondary amine group deriving from reacted Jeffamine primary amine group, can react with any halogeno alkyl or alkyl sulfate compound present in the mixture. The resulted tertiary amine group can further react with any halogeno alkyl or alkyl sulfate compound present in the mixture to form quaternary ammonium group. Halogen/Sulfate group can be from intermediate polymer chain ends or from starting raw material. The resulting polymer comprising the repeating unit of formula I can be thus more or less branched/reticulated. This reticulation/branching is controllable via the molar ratio of the compounds used in the synthesis and through process conditions also (applied temperature, batch versus semi continuous for example).

Furthermore, the amine groups (secondary or tertiary) present in the polymer comprising the repeating unit of

formula I give the possibility to make post polymerization functionalization with any further anionic alkylating agent. As example, sodium monochloroacetate (SMCA) can be used for post polymerization functionalization of the residual amine groups of the new cationic polymer comprising the repeating unit of formula I, forming then cationic and carboxybetaine functionalities on the same polymer chain backbone.

A non limiting example of a structure of the polymer of the invention in which one Y is NH and the other Y is $NR_{10}$ is given below:

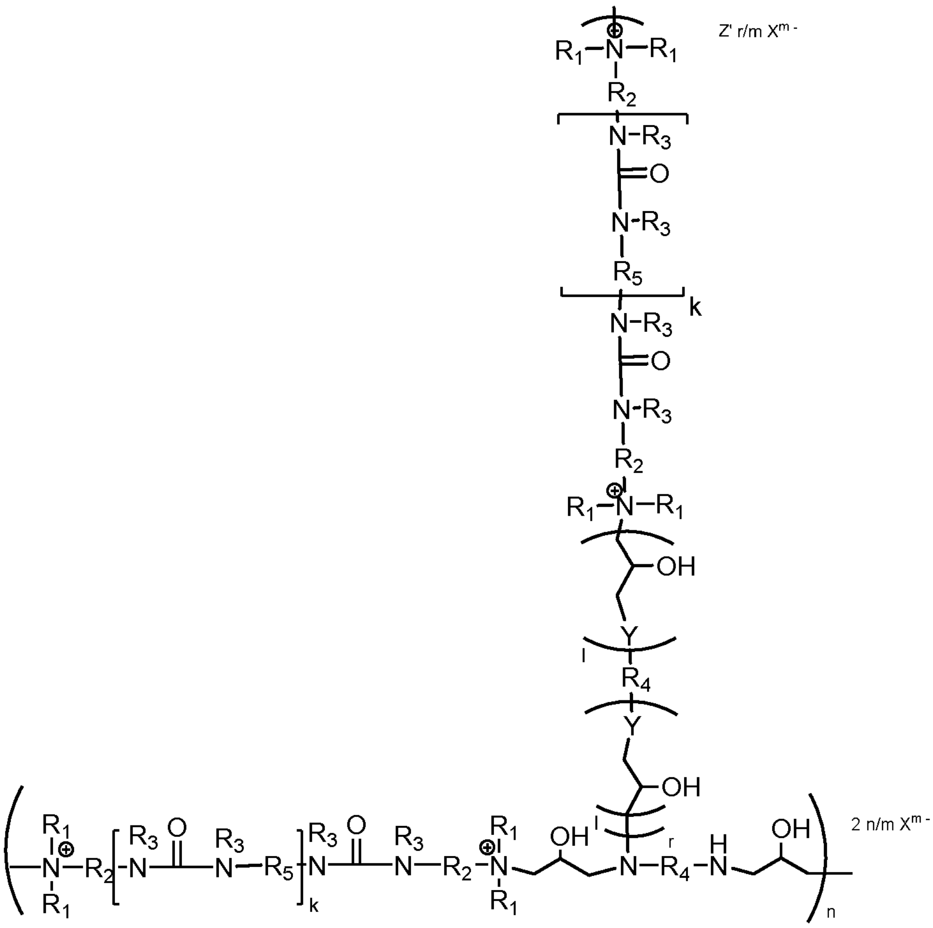

$R_1$, $R_2$, $R_3$, $R_4$ as well as Y, k, l, n, m, X have the same meaning as previously defined. "r" is an integer of 1 or more (preferably 1 to 20) and in this formula Z is 2 and Z' is an integer between 2 and 4.

Another non-limiting example of a structure of the polymer of the invention in which one Y is $NR_{10}$ and the other is $-N^+R_{11}R_{12}$ is given below:

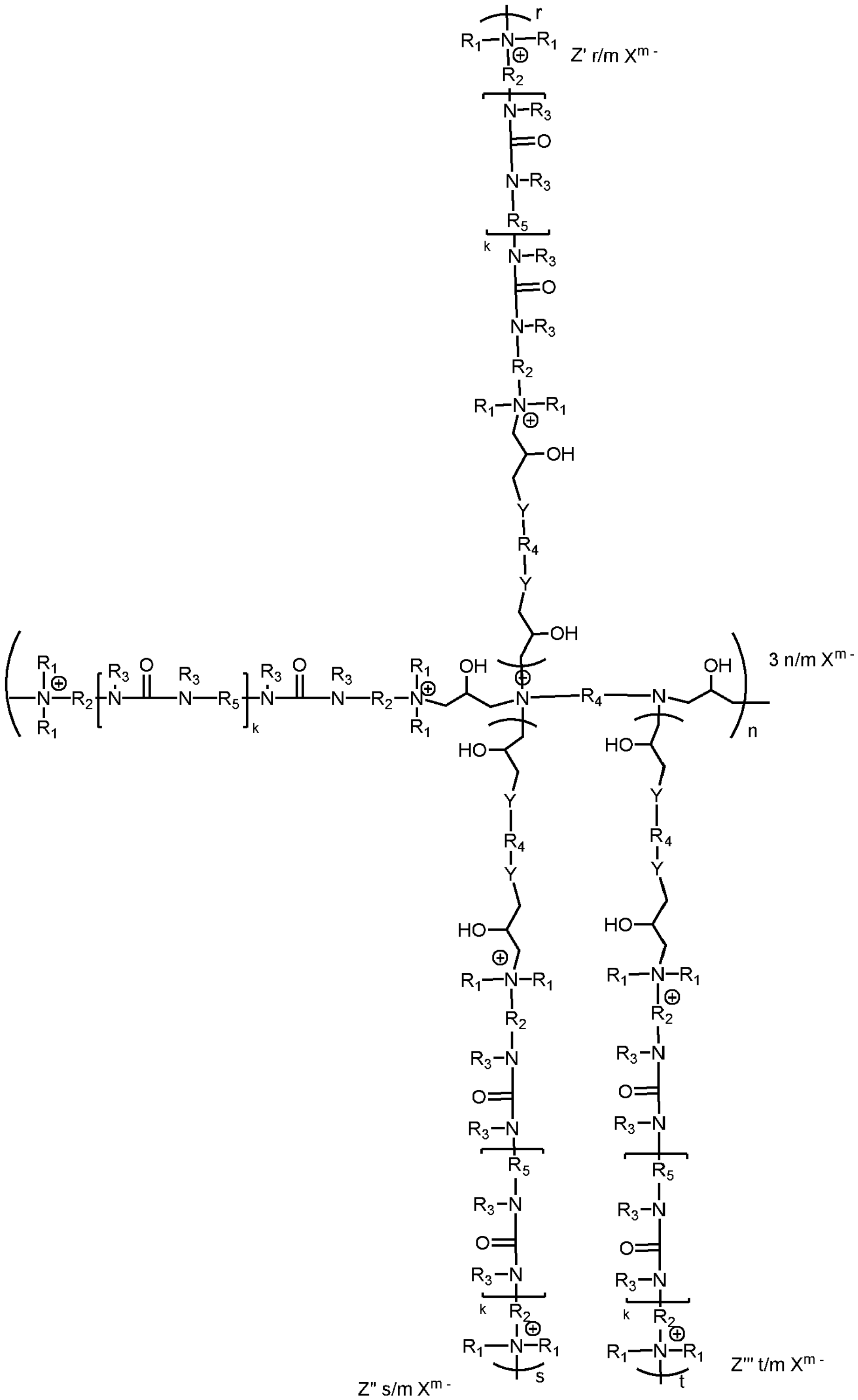

$R_1$, $R_2$, $R_3$, $R_4$ as well as Y, k, n, m, X have the same meaning as previously defined. I is 1."r", "s" and "t" are integers of 1 or more (preferably 1 to 20) and in this formula Z is 3, and Z', Z" and Z"' are integers between 2 and 4.

For sake of clarity Z is 2 when Y is not a quaternary ammonium. Z is 3 when one of the Y is a quaternary ammonium and Z is 4 when both Y are quaternary ammonium.

Z thus is a factor that is going to be multiplied by the ratio n/m to provide the exact number of counterion $X^{m-}$ necessary to reach the neutrality of the polymer comprising the repeating unit of formula I, wherein m is the valency of the anion and n is the number of repeating units of formula I.

The same reasoning applies to Z', Z" and Z"' and all potential additional Z groups that would result from a reticulation on the repeating unit of formula I.

According to the invention, k is greater than 1, preferably between 1 and 20, even more preferably between 1 and 15. The structure of the polymer comprising repeating units of formula I is based on polyurea diamine condensates.

The polymer according to the invention is preferably such that in formula I:

$R_1$ are $C_1$ alkyl groups, i.e methyl groups;
$R_2$ are $C_2$ or $C_3$ alkylene group; and
$R_2$ are hydrogen atoms.

In this preferred polymer, $R_5$ may represent a $C_2$ to $C_6$ alkylene group andor an arylene group substituted with carboxylic acid group.

According to a preferred embodiment, the polymer according to the invention is such that in formula I: $R_4$ represents an oxyalkylene group of formula A:

$$(-CHR_6CH_2)_a-(OCH_2CHR_7)_b-(OCH_2CHR_8)_c-(OCH_2CHR_9)_d \qquad (A)$$

wherein

"a" represents 1;
"b" represents an integer of 1 or more, preferably less than 70;
"c" and "d" represent independently from one another an integer of 0 or more, preferably less than 70; and
$R_6$ is methyl or hydrogen, $R_7$ is hydrogen, $R_8$ is hydrogen or methyl and $R_9$ is methyl group;
Y represents an oxygen atom; and
l is 1.

In an advantageous embodiment, the polymer according to the invention is such that, in formula I:

n represents a positive integer from 1 to 50;
m is 1; and
X is Cl.

It is particularly preferred that the polymer according to the invention has a weight average molecular weight ranging from 1 to 100 kg/mol, preferably 2 to 50 kg/mol.

In a specific embodiment, the polymer is characterized by a cationic charge density. The cationic charge density expressed in mmol/g is calculated as a ratio of the quantity of the moles of the amine groups in the urea di-amine compound of formula II (in mmol) and the sum of the masses (in g) of the urea compound of formula II with the alkylating compound of formula III. It is particularly preferred that the polymer according to the invention has a cationic charge density ranging from 0.1 to 5.4 mmol/g, preferably 0.6 to 5.2 mmol/g.

The polymer comprising the repeating unit of formula I, depending on the ratio of the reagents used, can be terminated with tertiary amine groups, with halogenoalkyl groups, hydroxyl groups or other groups resulting from post polymerization polymer modification reaction of the previously mentioned terminating groups.

**Molar** mass determination method

In the present patent application, unless otherwise indicated, when reference is made to molar mass (or molecular weight), it will relate to the absolute weight-average molar mass, expressed in g/mol.

The mass distribution of the polymer is measured by SEC MALS analysis (SEC: Size Exclusion Chromatography - MALS: Multi-Angle Laser Scattering) in order to obtain the real values, expressed in g/mol. Light scattering is an absolute technique, meaning that it does not depend on any calibration standards or calibration curves (M.W. Spears, The Column 12(11), 18-21 (2016)).

The SEC MALS analysis is performed with an HPLC chain equipped with 2 detectors: Differential refractometer RI - the concentration detector and MALS detector (Multi-Angle Laser Scattering) - the mass detector. The software records the chromatograms of the detectors: - one for the RI detector, and one for each angle of the MALS detector.

For each slice of the chromatograms (for the polymeric species), the software calculates: the concentration of the polymer (RI signal = constant*dn/dc*concentration) and the mass Mi of the slice.

From particular Mi data, the software calculates the mass distribution: Mw, Mn and polydispersity index Ip =Mw/Mn.

The calculation of the molar masses requires the refractive index increment, dn/dc of the polymer. It is a constant, depending on the nature of the mobile phase, the temperature of the experimental conditions and the wavelength of the

laser, among others.

This constant can be measured according to the eluted fraction from the SEC MALS analysis with a refractometer.

For the polymers of the present patent application, "dn/dc" is calculated by the software according the mass recovery of the eluted fraction: the applied dn/dc=0.17 mL/g leads from about 90 to 100 % wt. mass recovery. For examples polymers, the molar mass were calculated based on the real Mi points, without any adjustment of the log (M) curve.

Detailed Analysis conditions are as follows:

- Analysis instrument: SEC system with MALS detector (Mini Dawn Heleos) and Agilent Differential Refractometer (RI)
- Pump: Agilent 1100
- Mobile phase: mixture of 80 % water with 0.1 M $NaNO_3$ , 200 ppm pDADMAC and 20 % $CH_3CN$ with pH =3
- Column (maker, model no.): Shodex OHpak SB 806M HQ (guard column with 3 columns of 30 cm)
- Temperature: 35 °C
- Flow rate: 1.0mL/min
- Injection amount and Sample concentration: 100μL, 0.1% (expressed in dry polymer)
- Data processing: ASTRA 7 (Wyatt)

**Preparation of the polymer comprising the repeating unit of formula I**

The polymer comprising the repeating unit of formula I as described above is typically obtained by a process comprising a step (i) of reacting a compound of formula II:

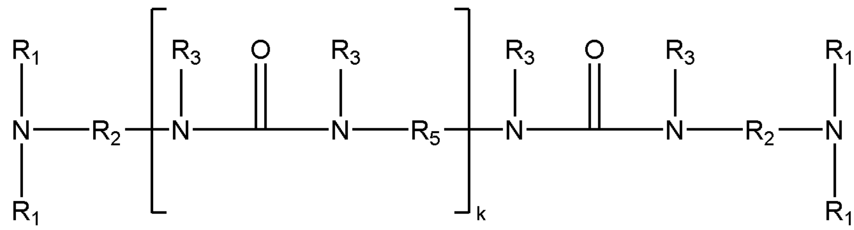
(II)

wherein

- $R_1$ are each independently a hydrogen atom, a $C_1$ to $C_4$ alkyl or hydroxyalkyl group, or a $C_2$ to $C_4$ alkenyl group;
- $R_2$ are each independently a $C_2$ to $C_{10}$ alkylene group;
- $R_3$ are each independently a hydrogen atom, a $C_1$ to $C_4$ alkyl or hydroxyalkyl group, or a $C_2$ to $C_4$ alkenyl group;
- $R_5$ represents an alkylene group, an oxyalkylene group of formula A, a cycloalkylene group, or an arylene group, optionally substituted and/or interrupted by one or more heteroatoms or heteroatom containing groups;
- k represents a positive integer from 1 to 20;

with a compound of formula III:

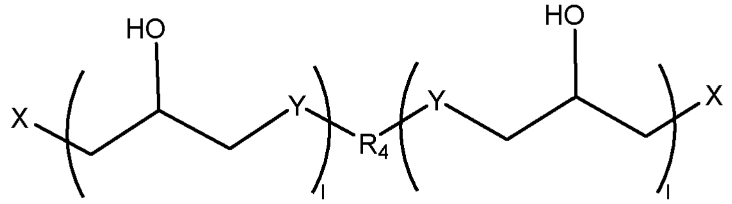
(III)

wherein

- $R_4$ represents an oxyalkylene group of formula A:

$$(-CHR_6CH_2)_a-(OCH_2CHR_7)_b-(OCH_2CHR_8)_c-(OCH_2CHR_9)_d \qquad (A)$$

wherein

"a" represents 1;

"b" represents an integer of 1 or more;
"c" and "d" represent independently from one another an integer of 0 or more; and
$R_6$, $R_7$, $R_8$ and $R_9$ represent independently from one another a hydrogen atom or a $C_1$ to $C_4$ alkyl group;

- Y represents an oxygen atom, $-NR_{10}-$ or $-N^+R_{11}R_{12}-$ wherein
  - $R_{10}$ represents a hydrogen atom or a radical deriving from any electrophilic compound present in the reaction mixture during the synthesis process of the polymer and that reacted by alkylation reaction with a secondary amine (Y = -NH-) present on the polymer during its synthesis; and
  - $R_{11}$ and $R_{12}$ represent radicals deriving from any electrophilic compounds present in the reaction mixture during the synthesis process of the polymer and that reacted by successive alkylation reactions with a secondary amine (Y = -NH-) and then a tertiary amine (e.g. Y = $-NR_{11}-$) present on the polymer during its synthesis;
- l represents a positive integer being 0 or 1; and
- X represents an electrophilic group, preferably selected from halogens or sulfates;

thus leading to a polymer comprising repeating units of formula I according to the invention.

The molar ratio between the compound of formula II and the compound of formula III is ranging from 0.75 to 1.25, preferably from 0.90 to 1.10 and more preferably from 0.95 to 1.05.

In a specific embodiment of the process of the invention, the compound of formula II is prepared by reaction of:

- a diamine of formula IV:

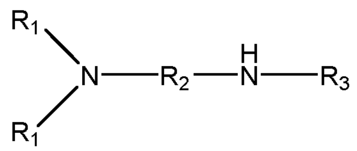

(IV)

wherein $R_1$, $R_2$ and $R_3$ are as defined above;

- with a diamine of formula IV':

$$H_2N-R_5-NH_2 \qquad (IV')$$

wherein $R_5$ is as defined above;

- and with urea of formula V $NH_2CONH_2$ (V);
- in a molar ratio IV:V:IV' from 1.9:1:0.05 to 0.4:1:0.8.

The higher the rate of the compound IV' used for the reaction the longer polyurea chain is formed. The upper limit of the rate of the compound IV' depends on its chemical nature. When targeting a polyurea based compound, the goal is to obtain the polyurea compound being liquid at reaction temperature and soluble or dispersible in solvent preferably water at room temperature.

It is preferred that the molar ratio IV:V ranges from 0.4 to 1.9, preferably from 0.6 to 1.7 and more preferably from 0.8 to 1.4 mol of the compound IV to 1 mol of compound V.

The molar ratio of IV':V is maximum 0.8 (from 0.05 to 0.8) and the remaining molar amount of diamine (up to 1) is completed by the diamine of formula IV, which, as it is monofunctional, has to be doubled and then the molar ratio of compound of formula IV is minimum 0.4 (from 0.4 to 1.9) .

It is particularly preferred that the compound of formula IV is dimethylaminopropylamine (DMAPA), meaning that $R_1$ are both methyl groups, $R_2$ is $-(CH_2)_3-$ and $R_3$ is hydrogen.

Examples of diamine of formula IV' are ethylene diamine, propylene diamine, hexamethylene diamine, Isophorone diamine, Diaminobenzoic acid and is not limited to the provided examples.

When $R_5$ represents an oxyalkylene group of formula A, the diamine of formula IV' can be a Jeffamine type compound, i.e. in particular, such a Jeffamine can be selected among the Jeffamine-diamines as available from Huntsman Company that are for example Jeffamine ED-600, ED-900, ED-2003, EDR, D-230, D-400, D-2000).

The very preferred IV' are ethylene diamine and diaminobenzoic acid.

In a particular embodiment of the process of the invention, the compound of formula III is prepared by reaction of a bifunctional compound of formula VI:

$HY-R_4-YH$ (VI)

wherein Y and $R_4$ are as defined previously for formula III;
with on oxirane containing compound of formula VII:

$X-CH_2-CH(CH_2O)$ (VII),

wherein X is as defined previously for formula III as well,

in presence of an acid catalyst and in a molar ratio VII:VI ranging from 1.8 to 2.1 of the molecule VII to 1 mol of molecule VI , preferably 2:1.

The acid catalyst usable in the reaction between the bifunctional compound of formula VI and the oxirane containing compound of formula VII can be selected among triflic acid, bis(trifluoromethane)sulfonamide, or $BF_3$ in acetic acid.
It is particularly preferred that the compound of formula VII be epichlorohydrin (EPI), that is to say X is chloride.
Regarding the compound of formula VI, it can be a polyalkylene glycol based diol, notably polyethylene glycol based diol (PEG diol), i.e. Y is an oxygen atom. In particular, such a PEG diol can be selected among: polyethylene glycol with preferred Mn being in the range of approximately from 100 to 3000 g/mol, and polypropylene glycol with preferred Mn being in the range of approximately from 100 to 3000 g/mol, and poly(ethylene / propylene) glycol copolymers of random and/or block nature with preferred Mn being in the range of approximately from 100 to 3000 g/mol, and poly(propylene-co-ethylene-co-propylene)glycol multi block copolymers with preferred Mn being in the range of approximately from 150 to 3000 g/mol, and poly(ethylene-co-propylene-co-ethylene)glycol multi block copolymers with preferred Mn being in the range of approximately from 150 to 3000 g/mol.
The preferred PEG diol are Polyethylene glycol of Mn around 200 and 600, and 1500.
Alternatively, the compound of formula VI can be a Jeffamine compound, i.e. Y is $NR_9$ with $R_9$ is H. In particular, such a Jeffamine can be selected among the Jeffamine-diamines and mixture of Jeffamine-diamines with Jeffamine-multiamines as available from Huntsman Company. Not limited examples are Jeffamine ED-600, ED-900, ED-2003, EDR, D-230, D-400, D-2000).

Example of process conditions

In the process of the invention, the polymer comprising repeating units of formula I is generally synthetized in standard reactor equipped with temperature control heating system, a lid containing multiple entries with installed a reflux system, a mechanical stirring system, a nitrogen purge line and a raw materials feed line. A stream of nitrogen is usually introduced into the reactor to prevent the oxidation of the reaction mixture and its discoloration. The synthesis is generally done in water solvent to achieve the final product solid content of about 30% - 70%. The polyurea di-amine compound can be placed in batch manner into the reactor as initial charge. Adequate alkylating agent (ex. di-halogen compound) is preferably introduced in semi-continuous manner to better control the exothermic effect of the reaction and to limit the branching reactions. The reaction is usually done under efficient stirring and under atmospheric pressure. The reaction temperature can range from 70 to 100°C, preferred 100°C. Typical reaction time is around 8 hours. The reaction product is generally a limpid to hazy viscous liquid.
In the process of the invention, the compound of formula II is generally synthetized in the standard reactor equipped with temperature control heating system, a lid containing multiple entries with installed a reflux system prolonged with the ammonia recovery line, a mechanical stirring system, a nitrogen purge line, a raw materials feed line and a recovery flask to collect eventual amine condensates carried away with ammonia gas. A stream of nitrogen can be used to prevent the oxidation of the reaction mixture and its discoloration. The reagents are usually introduced into the reactor at batch manner at the beginning of the process, without any solvent. Stirring and heating are preferably maintained for around 10 -15 hours at atmospheric pressure. At this step, the reaction is typically done at 2 temperatures, at the begging at around 110- 130°C, then 145°C -155°C. During all heating time the ammonia can be trapped in water flasks. When no more ammonia flow is observed the assembly can be placed under vacuum at around 350 - 550 mmHg at 145 - 155°C for around 2 hours to recover the remaining in the reactor ammonia and not reacted di-amine raw materials. The vacuum can be then broken and the assembly can be cooled to ambient temperature. The product is typically liquid at room temperature.
In the process of the invention, the compound of formula III can be synthetized in the standard reactor equipped

with temperature control heating system, a lid containing multiple entries with installed a reflux system, a mechanical stirring system, a nitrogen purge line and a raw materials feed line. To ensure a total conversion of the reagents at reasonable times optionally a catalyst can be used being adequate Bronsted and Lewis acid. Typically raw material of formula VI and catalyst are added in batch manner at the beginning of the reaction, and the reagent of the formula VII is feeded at semi-continuous manner for better control the reaction exothermic effect and the possible branching reactions. The reaction can be done under atmospheric pressure. The reaction temperature is typically low ranging from 25 to 60°C for better control of the possible branching. The reaction can be done in bulk without any solvent. The final product can be from a liquid to a wax like product.

**Uses of the polymer comprising the repeating unit of formula I**

The polymer comprising repeating units of formula I of the present invention is usable in many surface treatment applications, notably in home and personal care applications (fabrics, hair, hard surfaces, toilets, etc.), but also in Industrial applications like lubricant for metal treatment, or binder between metal and organic coatings.

Other uses of the polymer comprising the repeating unit of formula I are agrochemical formulations and coatings formulations.

In particular, the present invention is targeting the use of the polymer according to the invention, as anti-microbial agent in:

a. laundry compositions, including but not limited to:

  i. laundry detergent compositions;

  ii. rinse-added laundry compositions such as fabric softener, laundry sanitizer;

  iii. ancillary laundry compositions;

  iv. fabric care compositions such as fabric freshener, fabric spray

b. hard surface cleaning compositions, including but not limited to:

  i. floor cleaning compositions

  ii. toilet or bathroom cleaning compositions

  iii. toilet bowl cleaning compositions

c. dish wash cleaning compositions such as hand dish wash and automatic dish wash compositions.

d. hair care compositions such as shampoo and conditioning compositions.

By "anti-microbial agent" it is understood that it is an agent that capable of killing or inhibiting the growth of microorganisms.

By "Ancillary laundry compositions", it is understood that it means compositions intended to be used in addition to the consumer's regular laundry products (laundry detergent, softener). For example in addition to a wash detergent and/or rinse added fabric conditioners. The ancillary laundry composition may be added into the wash liquor at any point in the wash cycle.

The present invention is also directed to the use of the polymer according to the invention, as dye fixing agent or transfer inhibitor agent or soil anti-redeposition agent or soil release agent or laundry additives deposition agent in laundry compositions. In case of laundry additive deposition agent, the laundry additive can be for example a fabric care polymer, a fragrance oil, or an encapsulated perfume.

Also, the present invention is directed to the use of the polymer according to the invention, as soil anti-redeposition agent or soil release agent or shining agent in dish wash compositions.

**Formulations comprising the polymer comprising repeating units of formula I**

The present invention is also directed to a formulation comprising:

(i) a polymer as defined above;

(ii) and an adjuvant selected from a surfactant and/or a thickening agent.

Indeed, as explained previously, the formulation of the present disclosure comprising the polymer comprising repeating units of formula I is suitable for a variety of consumer applications.

In one embodiment of the present disclosure, the formulation is a homecare formation or personal care formulation. Examples of the formulations of the invention include, but are not limited to, surface cleaners such as those intended for use in bathrooms, kitchens, living areas, hard floor cleaners, carpet cleaners, furniture cleaners, glass/mirror cleaners; toilet care products including solid toilet cleaners such as rim devices and those designed to be placed in the cistern, liquid toilet cleaners excluding those comprising hypochlorite bleaches; dishwashing products such as washing up liquids and preparations from dishwashing machines such as dishwashing solids (e.g. powders and tablets) & liquids; laundry products such as solid detergents (e.g. powders and tablets), liquid detergents and fabric conditioners and "2 in 1" products comprising detergent and fabric conditioner; cleaning products intended for use outdoors such as those for cleaning for wood, stone, concrete or plastics, for example patio cleaner, garden furniture cleaners/treatments, BBQ cleaners, wall and fence cleaners/treatments, plant sprays such as those intended to remove insects such as aphides from plants; food sprays, such as those suitable for use in food preservation; personal care products such as bath and shower products; soaps, including liquid and solid soaps, hand sanitizers, deodorants and antiperspirants, haircare products including shampoos, for example anti-scalp odour shampoos, shampoos for the control of head lice eggs and anti-dandruff shampoos, hair conditioners, hair styling products such as hair mousses, gels and sprays, skin care products such as shaving products, cosmetics and products for hair removal; baby products including baby cleaning and cleansing products such as baby bath, soaps, wipes, moisturizers, nappy rash cream, products for cleaning surfaces that have regular & high incidence of infant & baby contact; first aid products and products for treating ailments and illnesses, including products for the topical treatment and/or prevention of minor infections such as athletes foot, spot/acne prevention/treatment products; foot hygiene products, including those for use on the foot and those for the treatment/deodorization of foot ware, particularly sports foot wear; products for cleaning and/or deodorizing vehicles such as cars.

In one aspect of the present disclosure, the formulation is a laundry detergent composition, comprising:

i) the polymer comprising repeating units of formula I as illustrated above; and

ii) a surfactant that can be selected from cationic surfactant, anionic surfactant, non-ionic surfactant, amphoteric surfactant or the combination thereof.

The laundry detergent composition can be in a form of liquid or solid.

Suitable non-ionic surfactants for use as the formulation surfactant include but are not limited to ethylene oxide/propylene oxide block polymers, polyethoxylated sorbitan esters, fatty esters of sorbitan, ethoxylated fatty esters (containing from 1 to 25 units of ethylene oxide), polyethoxylated $C_8$-$C_{22}$ alcohols (containing from 1 to 25 units of ethylene oxide), polyethyoxylated $C_6$-$C_{22}$ alkylphenols (containing from 5 to 25 units of ethylene oxide), alkylpolyglycosides. Examples include but are not limited to nonyl phenol ethoxylate (9EO), Nonyl phenol ethoxylate (2EO), octyl phenol ethoxylate (10EO), $C_{12}$/$C_{14}$ synthetic ethoxylate (8EO), stearyl alcohol ethoxylate (7EO), cetostearyl alcohol ethoxylate (20EO), coconut fatty amine ethoxylate (10EO), sorbitan monolaurate ethoxylate, 80% PO/20% EO, coconut diethanolamide (shampoo foam booster), sorbitan monolaurate, sorbitan monolaurate 4EO, di-isopropyl adipate, alkyl poly glucosides, such as $C_6$-$_{20}$, preferably $C_8$-$_{10}$ alkyl glucosides, eg Surfac APG (D-Glucopyranose oligomers $C_8$-$_{10}$ alkyl glucosides, CAS 161074-97-1, available from Seppic, UK), and cetostearyl stearate. Other suitable non-ionic surfactants include Neodol 25-7 ($C_{12/15}$ alcohol 7 ethoxylate (EO), CAS 68131-39-5), Surfac LM90/85 ($C_{12/15}$ alcohol 9 ethoxylate (EO), CAS 68131-39-5), Surfac 65/95 ($C_{9/11}$ alcohol 6.5 ethoxylate (EO), CAS 68439-45-2), Tomadol PF9 ($C_{9/11}$ alcohol 6.0 ethoxylate (EO), CAS 68439-46-3), Surfac T80 Veg (Polysorbate 80, Polyoxyethylene sorbate mono oleate, CAS 9005-65-6), Tween 60 (Polysorbate 60, Polyoxyethylene sorbate mono stearate, CAS 9005-67-8), Tween 40 (Polysorbate 40, Polyoxyethylene sorbate mono palmitate, CAS 9005-66-7), Surfac T-20 (Polysorbate 20, Polyoxyethylene sorbate mono laurate, CAS 9005-64-5), Surfac PGHC (Hydrogenated Castor oil 40EO, CAS 61788-85-0), Ninol 49-CE (Coconut diethanolamide, CAS 68603-42-9).

The anionic surfactants contemplated in the present disclosure as surface-active agent comprise the major active components in conventional detergent systems, including any of the known hydrophobes attached to a carboxylate, sulphonate, sulfate or phosphate polar, solubilizing group including salts. Salts may be the sodium, potassium, ammonium and amine salts of such surfactants. Useful anionic surface-active agents can be organic sulfuric reaction products having in their molecular structure an alkyl group containing from about 8 to about 22 carbon atoms and a sulfonic acid or sulfuric acid ester group, or mixtures thereof. (Included in the term "alkyl" is the alkyl portion of acyl groups.) Examples of this group of synthetic detersive surfactants which can be used in the present disclosure are the alkyl sulfates, especially those obtained by sulfating the higher alcohols (C8-C18 carbon atoms) produced from the glycerides of tallow or coconut oil; and alkyl benzene sulphonates.

Other useful anionic surface-active agents herein include the esters of alpha-sulphonated fatty acids preferably containing from about 6 to 20 carbon atoms in the ester group; 2-acyloxyalkane-1-sulfonic acids preferably containing from about 2 to 9 carbon atoms in the acyl group and from about 9 to about 23 carbon atoms in the alkane moiety; alkyl ether sulfates preferably containing from about 10 to 20 carbon atoms in the alkyl group and from about 1 to 30 moles of ethylene oxide; olefin sulphonates preferably containing from about 12 to 24 carbon atoms; and beta-alkyloxy alkane sulphonates preferably containing from about 1 to 3 carbon atoms in the alkyl group and from about 8 to 20 carbon atoms in the alkane moiety.

Specific preferred anionics for use herein include: the linear $C_{10}$-$C_{14}$ alkyl benzene sulphonates (LAS); the branched $C_{10}$-$C_{14}$ alkyl benzene sulphonates (ABS); the tallow alkyl sulfates, the coconut alkyl glyceryl ether sulphonates; the sulfated condensation products of mixed $C_{10}$-$C_{18}$ tallow alcohols with from about 1 to about 14 moles of ethylene oxide; and the mixtures of higher fatty acids containing from 10 to 18 carbon atoms.

It is to be recognized that any of the foregoing anionic surfactants can be used separately herein or as mixtures. Moreover, commercial grades of the surfactants can contain non-interfering components which are processing by-products. For example, commercial alkaryl sulphonates, preferably $C_{10}$-$C_{14}$, can comprise alkyl benzene sulphonates, alkyl toluene sulphonates, alkyl naphthalene sulphonates and alkyl poly-benzenoid sulphonates. Such materials and mixtures thereof are fully contemplated for use herein.

In another aspect of the present disclosure, the formulation is a sanitizer composition, comprising:

i) the polymer comprising the repeating units of formula I as illustrated above; and

ii) a thickening agent.

Preferred thickening agents used in the formulation of the present disclosure are commercially available fully synthetic thickeners based on acrylic acid copolymers, methacrylic acid copolymers, vinyl polymers, polycarboxylic acids, polyimines, polyamides and polyethers. In addition, natural thickening agents such as guars, carboxymethylcelluloses, cellulose ethers, xanthans, locust bean gum may be used, which are optionally modified by suitable chemical reactions, possibly even in view of their specific use in connection with the present disclosure. The foregoing components may be used either alone or in combinations thereof.

Illustrative examples of commercially available thickeners is a polymeric thickening agent sold under the name Jaguar HP105, distributed by Solvay.

In yet another aspect of the present disclosure, it is provided the use of the polymer comprising the repeating units of formula I or a formulation comprising it, as illustrated above, for substantially reducing or controlling the formation of microbial colonies on or at the surface.

In still another aspect of the present disclosure, it is provided the use of the polymer comprising the repeating units of formula I or a formulation comprising it, as illustrated above, for controlling malodor.

The following examples illustrate the invention.

## EXAMPLES

### A. Raw materials

Table 1 below shows the reagents used in the examples and its abbreviations. All reagents used were purchased from Sigma Aldrich.

**Table 1:** Raw materials used in the experimental part

| Product | Abbreviation | CAS |
|---|---|---|
| Urea | - | 57-13-6 |
| Hexamethylenediamine | HMDA | 124-09-3 |
| Dimethylaminopropylamine | DMAPA | 109-55-7 |
| Diaminopropane | DAP | 109-76-2 |
| Ethylenediamine | EDA | 107-15-3 |
| Polyethylene glycol of Mn around 200 and 600, and 1500 | PEG 200, 600, 1500 | 25322-68-3 |
| Jeffamine ED600, ED900, D400 | JFA ED600, ED900, D400 | 83713-18-5 |
| Bis(chloroethyl) ether | DCE1 | 111-44-4 |

(continued)

| Product | Abbreviation | CAS |
|---|---|---|
| Bis(chloroethoxy)ether | DCE2 | 112-26-5 |
| Bis((chloroethoxy)ethyl)ether | DCE3 | 638-56-2 |
| Epichlorohydrin | EPI | 106-89-8 |
| Triflic acid | TA | 1493-13-6 |
| Polyquaternium-2 polymer | PQ-2 | 68555-36-5 |

**B. Di-chloro compounds synthesis**

Di-chloro compounds from PEG and EPI

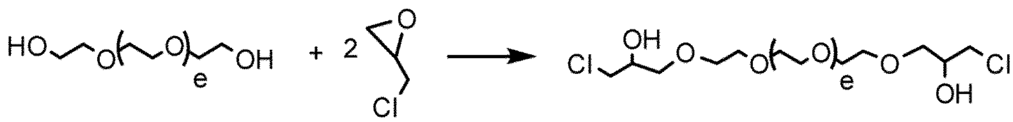

All di-chloro compounds were synthetized according to the same process. The whole synthesis is conducted in a reactor equipped with temperature control heating system, a lid containing multiple entries with installed a reflux system, a mechanical stirring system, a nitrogen purge line and a raw materials feed line. To ensure a total conversion of the reagents at reasonable times the TA catalyst was used

Adequate PEG was weighed and transferred to the purged with nitrogen reactor. The catalyst was then added to the reactor in a one shot manner. The reaction mixture was heated to 40°C (or to 50°C in case of the PEG1500) and stirred for 12 hours. During the first two hours of the heating the epichlorohydrine was added semicontinuously using a syringe type pump. The temperature was controlled by cryothermostat type bath.

The reaction completion was followed with $^{13}C$ NMR analyses which indicated that the EPI and PEG were converted into target di-chloro compounds.

The quantities of the reagents used for the particular examples are provided in Table 2 below and the conversion results of the reaction is provided in Table 3 below.

**Table 2:** Reagents quantities used for PEG and EPI based di-chloro compounds synthesis.

| Example | Reagent 1 | | Reagent 2 | | Catalyst (Triflic acid, TA) |
|---|---|---|---|---|---|
| | Type | grams | Type | grams | grams |
| Example 1 | PEG 200 | 67.3 | EPI | 62.2 | 0.50 |
| Example 2 | PEG 1500 | 115.6 | EPI | 14.3 | 0.15 |
| Example 3 | PEG 600 | 98.5 | EPI | 30.5 | 0.50 |

**Table 3:** Conversion results for the PEG/EPI di-chloro compounds synthesis.

| Example | Catalyst | T°C | Conversion of EPI ($^1H$ NMR) | Comment |
|---|---|---|---|---|
| Example 1 | Triflic acid | 40 | 100% | Desired product obtained, reaction mixture transparent and nearly colorless |
| Example 2 | Triflic acid | 50 | 100% | Desired product obtained, 50 °C due to solid form of PEG1500 at 40°C; reaction mixture transparent and nearly colorless |
| Example 3 | Triflic acid | 40 | 100% | Desired product obtained, reaction mixture transparent and nearly colorless |

Conclusion : a total conversion of the EPI was obtained.

Di-chloro compounds from JFA and EPI

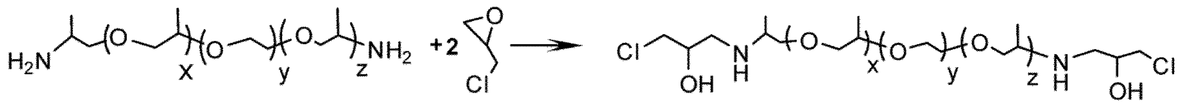

All di-chloro compounds were synthetized according to the same process. The whole synthesis is conducted in a reactor equipped with temperature control heating system, a lid containing multiple entries with installed a reflux system, a mechanical stirring system, a nitrogen purge line and a raw materials feed line. None catalyst addition was needed to convert the EPI and Jeffamine into desired di-chloro compounds.

Adequate JFA was weighed and transferred to the purged with nitrogen reactor. The reaction mixture was heated to 40 °C and stirred for 6 hours. During the first two hours of the heating the epichlorohydrine was added semi-continuously using a syringe type pump. The exothermic effect was controlled by cryothermostat type bath.

The reaction completion was followed with $^{13}C$ NMR analyses. The EPI and JFA were converted into target di-chloro compounds. The branching alkylation reaction of the resulted secondary amine with the chloro compounds present in the reaction mixture was also stated with $^{13}C$ NMR analyses. The branching reaction continued during product storage up to very viscous product of gel-like form after few weeks of storage at room temperature.

The quantities of the reagents used for the particular examples are provided in the Table 4 below and the conversion results of the reaction is provided in Table 5 below.

**Table 4:** Reagents quantities used for JFA and EPI based di-chloro compounds synthesis.

| **Example** | **Reagent 1** | | **Reagent 2** | |
|---|---|---|---|---|
| | **Type** | **grams** | **Type** | **grams** |
| Example 4 | JFA ED600 | 99.4 | EPI | 30.6 |
| Example 5 | JFA ED900 | 107.8 | EPI | 22.2 |
| Example 6 | JFA D400 | 90.9 | EPI | 39.1 |

**Table 5:** Conversion results for the Jeffamine/EPI di-chloro compounds synthesis.

| Example | T°C | Conversion of EPI ($^1H$ NMR) | Jeffamine | Comment |
|---|---|---|---|---|
| Example 4 | 40 | 100% | ED-600 | Desired product obtained, branching visible on NMR spectra; reaction mixture transparent and yellowish |
| Example 5 | 40 | 100% | ED-900 | Desired product obtained, branching visible on NMR spectra; reaction mixture transparent and yellowish |
| Example 6 | 40 | 100% | D-400 | Desired product obtained, branching visible on NMR spectra; reaction mixture transparent and yellowish |

Conclusion : a total conversion of the EPI was obtained.

**C. Polyurea diamine compounds synthesis**

The Polyurea di-amine compounds were synthetized according to the same process. The whole synthesis is conducted in the reactor equipped with temperature control heating system, a lid containing multiple entries with installed a reflux system prolonged with the ammonia recovery line, a mechanical stirring system, a nitrogen purge line and a raw materials feed line. The ammonia recovery line is composed of two flasks where ammonia is trapped thanks to purging through the water. The water quantity applied corresponds to 10% wt. of ammonia concentration based on total

consumption of the urea during the reaction. Another, empty recovery flask was placed between a reflux column at the outlet of the reactor and the water flask to collect eventual amine condensates carried away with ammonia gas.

To synthetize the polyurea di-amine compound a mixture of the primary / tertiary amine being DMAPA with di primary amine being either HMDA, DAP or EDA were used. These di primary amine compounds build the repeating urea blocks of the formed polyurea di-amine macro compound.

The molar ratios of the reagents in case of the particular examples are provided in table 6.

The quantities of the reagents used for the particular examples are provided in table 7

The applied ratio of urea to amine compounds was equal to one. This ratio concerns the reacting functionalities of the urea with particular amines compounds. Thus, the molar ratio between urea, di- primary amine compound (HMDA, DAP, EDA) and DMAPA noted respectively as x : y : z was kept to respect the equation $x = y + z/2$. In provided examples the di primary amine molar ratio was selected at the manner to obtain a liquid product at reaction temperature (~120 - 150°C) and being soluble at room temperature in water. It was stated that for high input of the di primary amine compound in the reaction mixture, the fast solidification of the reaction mixture at given reaction temperature can occur often leading to the non-water soluble polyurea compound.

**Table 6:** Molar ratio of reagents used for polyurea di-amine compounds synthesis

| Polyurea di-amine compound | Urea x | DMAPA z | DAP y | HMDA y | EDA y |
|---|---|---|---|---|---|
| Example 7 | 1 | 1.8 | - | 0.1 | - |
| Example 8 | 1 | 1 | 0.5 | - | - |
| Example 9 | 1 | 0.8 | - | - | 0.6 |
| Example 9 A | 1 | 1.1 | - | - | 0.45 |

**Table 7:** Reagents quantities used for polyurea di-amine compounds synthesis

| Polyurea di-amine compound | Urea, grams | DMAPA, grams | DAP, grams | HMDA, grams | EDA, grams |
|---|---|---|---|---|---|
| Example 7 | 26.3 | 80.7 | - | 5.0 | - |
| Example 8 | 35.25 | 60.0 | 21.75 | - | - |
| Example 9 | 40.2 | 54.7 | - | - | 24.1 |
| Example 9 A | 120.5 | 225.3 | - | - | 54.2 |

The general synthesis protocol of the polyurea di-amine compounds was as following:
A stream of nitrogen was introduced into the reactor to prevent the oxidation of the reaction mixture and its discoloration. The appropriate weighted quantities of the di-amine compounds are introduced into the reactor. Preheat of the reactor can be necessary if the di-amine compound has to be melted before the mechanical stirring is started. Then the appropriate weighted quantities of the Urea and diamines are introduced into the reactor.
Stirring and heating are maintained for around 11 hours. The reaction is done at 2 temperatures, at the begging during first 7 hours the temperature is maintained at around 120°C, than during next 4 hours at around 145°C -150°C. During all heating time the ammonia purge is observed at trapping water flasks.

After 11 hours of the reaction at atmospheric pressure, the assembly is placed under vacuum at around 450 mmHg at 145 - 150°C for 2 hours to recover the remaining in the reactor ammonia and not reacted di-amine raw materials. The vacuum is then broken and the assembly is cooled to ambient temperature.

If the product is not sufficiently liquid, it can be diluted with solvent (preferably water) to target concentration.

Finally, the contents of the ammonia trapping flasks, of the di-amines recovery flask and of the reactor are collected separately in order to be analyzed.

The reaction yields provided in table 8 were calculated from water ammonia solutions amine number titration data (solutions recovered from ammonia trapping flasks). The Amine number (AN) titration is done by diluting of 0.2 to 0.3 gram of sample in 50mL of acetic acid and titrating it against 0.1 M perchloric acid. The number of moles of perchloric acid needed to achieve the equivalency point corresponds to number of moles of the ammonia in the test sample. To calculate the reaction yield, the titrated formed during reaction ammonia is compared to overall theoretical ammonia quantity possible to be formed from applied for reaction urea quantity.

**Table 8:** Reaction yield data and product appearance for particular synthesis examples.

| Polyurea di-amine compound | Formed $NH_3$, grams - based on titration analysis | Reaction yield based on $NH_3$ titration data, % | Product form at room temperature |
|---|---|---|---|
| Example 7 | 14.2 | 95% | White wax like, soluble in water |
| Example 8 | 19.5 | 98% | White wax like, soluble in water |
| Example 9 | 20.6 | 100% | White wax like, soluble in hot water |
| Example 9A | 20.6 | 100% | White wax like, soluble in water |

The Equivalent Molecular Weight (EMW) of the obtained polyurea compounds was calculated from Amine number titration data of the final reaction mixture according to equation 1.

$$\text{Equation 1: EMW= 56100 (mg KOH/mol) / AN1 (mg KOH/g).}$$

The Amine number (AN1) titration is done according to the method described above. The number of moles of perchloric acid needed to achieve the equivalency point corresponds to number of moles of the amine functionalities in the test sample. The Amine number is expressed in mg KOH / g of sample. Table 9 regroups the obtained data for particular synthesis examples.

**Table 9:** Amine number (AN1) and Equivalent Molecular Weight (EMW) data obtained for particular synthesis examples.

| Polymer | AN1 (mg KOH/g) | EMW (g/mol) |
|---|---|---|
| Example 7 | 471.9 | 118.9 |
| Example 8 | 273.1 | 205.4 |
| Example 9 | 284.5 | 197.2 |
| Example 9 A | 418.7 | 134.0 |

**D. Cationic Polymers Synthesis**

All cationic polymers based on di-chloro compounds were synthetized according to the same process. The whole synthesis is conducted in a reactor equipped with temperature control heating system, a lid containing multiple entries with installed a reflux system, a mechanical stirring system, a nitrogen purge line and a raw materials feed line.

A stream of nitrogen was introduced into the reactor to prevent the oxidation of the reaction mixture and its discoloration.

The weighted then diluted with water to about 35% - 50% concentration polyurea di-amine compound was placed into the reactor. Adequate chlorinated alkylating agent (di-chloro compound) was weighted and transferred to syringe type feeding pump. The initial reactor content was heated to 100°C and reaction mixture was stirred during all the synthesis process. During the first 4 hours of the heating the chlorinated alkylating agent was added semi-continuously using a syringe type pump. The exothermic effect was controlled by cryothermostat type bath. After 8 hours of heating at 100°C the reaction mixture was cooled down to room temperature and the product was analyzed by $^{1}H$ NMR and $^{13}C$ NMR to determine residual di-chloro compounds residual polyurea compounds, as well as Solid Content, pH, Brookfield viscosity and amine number (AN1).

For comparison aspects the "Polyquaternium-2" polymer can be obtained from Aldrich being the cationic polymer of a Mono urea di-amine compound with DCE1 di-halogen alkylating agent.

The molar ratio of the reagents and quantities of the reagents (calculations according to EMW which takes into account the number of reactive groups in the particular reagent) used for the particular cationic polymers synthesis examples based on polyurea di-amine compounds with various di-chloro compounds are provided in Tables 10 and 11 respectively below. The obtained products analysis characteristics are provided in Table 12 below.

**Table 10:** Molar ratio of the reagents used for cationic polymers synthesis based on polyurea di-amine with various di-chloro compounds and the corresponding theoretical cationic charge densities of the cationic polymers.

| Cationic polymer | Reagent 1 | | Reagent 2 | | Cationic charge density; mmol/g |
|---|---|---|---|---|---|
| | Type | Mol ratio | Type | Mol ratio | |
| Example 10 | Polyurea di-amine Example 7 | 1 | DCE1 | 1 | 5.25 |
| Example 11 | Polyurea di-amine Example 7 | 1 | DCE2 | 1 | 4.7 |
| Example 12 | Polyurea di-amine Example 7 | 1 | DCE3 | 1 | 4.3 |
| Example 13 | Polyurea di-amine Example 8 | 1 | DCE1 | 1 | 3.6 |
| Example 14 | Polyurea di-amine Example 8 | 1 | DCE3 | 1 | 3.1 |
| Example 15 | Polyurea di-amine Example 9 | 1 | DCE1 and Example 4 JFA ED 600 / EPI | 0.5 0.5 | 2.3 |
| Example 16 | Polyurea di-amine Example 9 | 1 | Example 4 JFA ED 600 / EPI | 1.25 | 1.4 |
| Example 17 | Polyurea di-amine Example 9 | 1 | Example 4 JFA ED 600 / EPI | 1 | 1.7 |
| Example 18 | Polyurea di-amine Example 9 | 1 | DCE1 | 0.75 | 3.9 |
| Example 19 | Polyurea di-amine Example 9 | 1 | DCE1 | 1 | 3.7 |
| Example 20 | Polyurea di-amine Example 9 | 1 | DCE3 | 1 | 3.2 |

**Table 11:** Quantities of the reagents used for cationic polymers synthesis based on polyurea di-amine with various di-chloro compounds.

| Cationic polymer | Reagent 1, grams | Reagent 2, grams | Water, grams |
|---|---|---|---|
| Example 10 | Polyurea di-amine Example 7 = 22.9 | DCE1 = 13.8 | 43.3 |
| Example 11 | Polyurea di-amine Example 7 = 27.2 | DCE2 = 21.4 | 51.4 |
| Example 12 | Polyurea di-amine Example 7 = 19.4 | DCE3 = 18.9 | 36.7 |
| Example 13 | Polyurea di-amine Example 8 = 28.3 | DCE1 = 9.7 | 62.0 |
| Example 14 | Polyurea di-amine Example 8 = 20.0 | DCE3 = 11.1 | 43.9 |
| Example 15 | Polyurea di-amine Example 9 = 21.0 | DCE1 = 3.9 and JFA ED600/EPI Example 4 = 21.2 | 50.2 |
| Example 16 | Polyurea di-amine Example 9 = 12.8 | JFA ED600/EPI Example 4 = 31.5 | 55.7 |
| Example 17 | Polyurea di-amine Example 9 = 16.6 | JFA ED600/EPI Example 4 = 31.2 | 80.0 |

(continued)

| Cationic polymer | Reagent 1, grams | Reagent 2, grams | Water, grams |
|---|---|---|---|
| Example 18 | Polyurea di-amine Example 9 = 26.4 | DCE1 = 8.6 | 40.0 |
| Example 19 | Polyurea di-amine Example 9 = 42.0 | DCE1 = 12.8 | 90.0 |
| Example 20 | Polyurea di-amine Example 9 = 18.0 | DCE3 = 13.9 | 43.1 |

**Table 12:** Characteristics of the final cationic polymers based on polyurea di-amine with various di-chloro compounds.

| Cationic polymer | Residual di-chloro compound (GC) | Residual polyurea di-amine compound ($^1$H NMR) | Amine Number AN, mgKOH/g (titration) | Solid Content, % (Gravimetric, 1 gram, 1 hour, 115°C) | pH (solution as is) | Mw (SEC MALS) g/mol |
|---|---|---|---|---|---|---|
| Example 10 | 0.05% | < 2% | 19.0 | 46.5% | 9.5 | 3500 |
| Example 11 | 0.06% | < 2% | 16.5 | 49.0% | 9.4 | |
| Example 12 | < 0.01% | < 2% | 13.7 | 52.5% | 9.2 | |
| Example 13 | < 0.01% | < 2% | 29.2 | 37.8% | 10.0 | |
| Example 14 | < 0.01% | < 2% | 24.6 | 42.3% | 10.0 | |
| Example 15 | < 0.01% | < 2% | 43.8 | 44.4% | 10.2 | |
| Example 16 | No concern | < 2% | 40.4 | 45.2% | 10.1 | |
| Example 17 | No concern | < 2% | 36.4 | 39.0% | 9.3 | 2800 |
| Example 18 | < 0.01% | < 2% | 42.9 | 51.3% | 9.7 | |
| Example 19 | < 0.01% | < 2% | 25.9 | 36.8% | 9.6 | |
| Example 20 | 0.05% | < 2% | 24.1 | 41.3% | 9.5 | |

**E. Soil anti-redeposition performance test in laundry composition**

The soil anti-redeposition performance was evaluated using a clay-peanut butter soil. The soil was prepared by mixing 25% (wt/wt) of standard clay from WFK (Testgewebe GmbH) with 5% (wt/wt) peanut butter from supermarket e.g. Skippy brand and 70% mineral oil from Aldrich. The mixture was blended well with an overhead stirrer for 30 minutes to obtain homogenous mixture.

The liquid detergent base composition to prepare the laundry detergent compositions for the test is given in Table 13 below.

**Table 13:** Liquid detergent base with 10% hole*.

| Composition | Part by weight |
|---|---|
| Linear alkyl benzene sulfonic acid, $C_{10}$-$_{16}$ | 20.0 |
| Ethoxylated fatty alcohol $C_{12}$-$_{18}$ (7 EO units) | 20.0 |
| Lauric acid | 10.0 |
| Sodium laureth sulphate (2 EO units) | 10.0 |
| Monoethanolamine | 8.0 |
| Water | 5.0 |
| Glycerol | 5.0 |

(continued)

| Composition | Part by weight |
| --- | --- |
| Propylene glycol | 12 |
| Hole* | 10 |
| *comprising the polymer comprising repeating units of formula I aqueous solution to achieve 1% polymer (wt/wt), and propylene glycol balance to 100%. | |

The polymer comprising repeating units of formula I was formulated in the liquid detergent compositions given in Table 14 below.

**Table 14:** Liquid detergent compositions

| Composition | Comparative example 21 | Comparative example 22 | Example 23 |
| --- | --- | --- | --- |
| | Part by weight | Part by weight | Part by weight |
| Liquid detergent base, 10% hole* | 90.0 | 90.0 | 90.0 |
| Sokalan HP20** (80% solid) | - | 1.25 | - |
| Example 15 (44.4% solid) | - | - | 2.25 |
| Propylene glycol | To 100 | To 100 | To 100 |
| ** Sokalan HP20 is one of industrial benchmark for anti-redeposition application in laundry. It is an ethoxylated polyethyleneimine. | | | |

The soil anti-redeposition test performance is carried out on the following test fabrics:

- Test fabric 1: 100% polyester, Style#777 from Testfabrics
- Test fabric 2: 50% / 50% polyester - cotton blend, Style#7422 from Testfabrics
- Test fabric 3: 100% polyester, W-30A from WFK
- Test fabric 4: 65% / 35% polyester - cotton blend, W-20A from WFK
- Test fabric 5: 100% Cotton from, W-10A from WFK
- Test fabric 6: 100% Bleached Cotton, Interlock Knit, T-460 from Testfabrics

<u>Washing:</u>

Prior to be used in the washing experiments, the test fabrics and the ballast fabric load were pretreated by washing them twice with the detergent composition without polymer i.e. comparative example 21 using a typical front load washing machine with washing program for cotton at 60°C. The pretreated fabrics were line-dried at temperature 22 degree centigrade with humidity of 60%. The purpose of the pretreatment is to remove any finishing substances from the fabrics.

The test fabrics were cut into squares 7cm x 7cm in size in three replicates and were washed in a LaunderOmeter® (SDLATLAS) with following conditions:

- Washing temperature: 40°C
- Washing time: 20 minutes
- Water volume: 500 ml
- Water hardness: 25°fH with Ca : Mg molar ratio = 4:1

- Detergent dosage: 2.0 grams per liter of the washing liquor
- Clay-peanut butter soil level: 0.5 gram per liter of the washing liquor
- Ballast load: 50 grams of terry bath towel (100% cotton, white color, e.g. Vagsjon from IKEA) cut into small swatches
- Number of steel balls: 50 pieces of steel balls
- LaunderOmeter rotation: 40 RPM.

After the wash, the fabrics were rinse twice with Singapore tab water for 1 minute each. Finally, the fabrics were line-dried at temperature 22 degree centigrade with humidity of 60%. The washing was repeated 5 times.

Evaluation:

The test fabric squares before washing experiment (referred to as white) and after 5 cumulative washes (referred to as wash) were analyzed with the ColorQuest XE reflectance colorimeter from HunterLab to measure their whiteness index according to CIE (The International Commission on Illumination) which is equivalent to the whiteness index published in ASTM Method E313 in 1998.

The anti-redeposition performance of the laundry detergent compositions with the polymer comprising repreating units of formula I according to the present invention and of the laundry detergent composition without polymer is assessed based on the following formula:

$$\Delta \text{WI CIE} = \text{WI CIE}_{white} - \text{WI CIE}_{wash}$$

The effectiveness of the soil anti-redeposition of the laundry detergent composition with the polymer comprising repeating units of formula I according to the present invention is reflected with lower ΔWI CIE values as shown in Table 15 below.

**Table 15:** The effectiveness of the soil anti-redeposition of the laundry detergent composition with the polymer comprising repeating units of formula I.

| Liquid Laundry Composition / Test fabrics | Comparative Example 21 | Comparative Example 22 | Example 23 |
|---|---|---|---|
| Test fabric 1 | 6.82 | 1.24 | 1.70 |
| Test fabric 2 | 14.34 | 4.99 | 5.34 |
| Test fabric 3 | 6.24 | 0.62 | 1.14 |
| Test fabric 4 | 10.18 | 3.83 | 3.88 |
| Test fabric 5 | 1.68 | 0.16 | 0.45 |
| Test fabric 6 | 7.07 | 4.74 | 4.83 |
| Total | 46.33 | 15.58 | 17.35 |

As shown by the results in Table 15, the presence of the polymer comprising repeating units of formula I of the present invention in the laundry detergent composition improves the soil anti-redeposition performance across different type of test fabrics.

**F. Antimicrobial performance**

Laundry Detergent compositions for the antimicrobial test are shown in Table 16 below.

**Table 16:** The liquid detergent compositions.

| Concentrated liquid laundry composition | Example 24 | Example 25 |
|---|---|---|
| | Part by weight | Part by weight |
| Ethoxylated fatty alcohol $C_{12}$-$_{18}$ (7 EO units) | 15.0 | 15.0 |

(continued)

| Concentrated liquid laundry composition | Example 24 | Example 25 |
|---|---|---|
| | Part by weight | Part by weight |
| Sodium fatty acid soap ($C_{10}$-$_{18}$) | 3.0 | 3.0 |
| Sodium laureth sulphate (2 EO units) | 9.0 | 9.0 |
| Propylene glycol | 6.5 | 6.5 |
| Example 10 | 1.3 | - |
| Example 11 | - | 1.3 |
| Water | To 100 | To 100 |
| Fabric | Polyester | Polyester |
| Wash cycle | 1 | 1 |

Test fabrics: 100% polyester, W-30A from WFK

Prior to be used in the antimicrobial experiments, the test fabric was pretreated by treated it twice with Singapore tap water without any cleaning composition using a typical front load washing machine with washing program for cotton at 90°C. The pretreated fabric was line-dried at temperature 22 degree centigrade with humidity of 60%. The purpose of the pretreatment is to remove any finishing substances from the fabric.

The standard polyester fabric (W-30A from WFK) was washed using a LaunderOmeter® (SDLATLAS) with the detergent compositions according to the Example 24 and 25. The detergent dosage is 5 gram per liter. The volume of the washing liquor is 500 ml. Fabric to liquor ratio (wt/wt) is 1 to 10. Singapore tap water with maximum hardness of 150ppm was used as the water source. The washing was done at temperature of 40 degree centigrade for 30 minutes. In the LaunderOmeter® pot, 50 pieces steel balls were added. After the laundry, the fabric was rinsed twice with Singapore tab water for 1 minute each. Finally, the fabric was line-dried at temperature 22 degree centigrade with humidity of 60%.

AATCC100 Antimicrobial Test

The washed and dried fabrics according to Example 24 to 25 were cut into square swatches with size of 3.8 x 3.8 ± 0.1 cm. The number of swatches needed for the test is equal to 1.0 ± 0.1 gram. Two bacteria strains i.e. Staphylococcus aureus (ATCC 6538) and Klebsiella pneumonia (ATCC 4352) were used for the test. The detail test was done according to the protocol AATCC TM 100-2019 which is available online via https://members.aatcc.org/store/tm100/513/.
The test results are shown in the Table 17 and 18 below:
The antimicrobial test results showed that the polymer comprising repeating units of formula I is capable of inhibiting the growth of the test bacteria.

**Table 17:** Count of Staphylococcus aureus (ATCC 6538) test bacteria recovered from the inoculated fabric.

| Example | Example 24 | Example 25 |
|---|---|---|
| Untreated Fabric (viability control), bacteria count at 0 contact time, CFU | 200,000 | 200,000 |
| Untreated Fabric (viability control) bacteria count at 24 hours contact time, CFU | 3,300,000 | 3,300,000 |
| Treated Fabric, bacteria count at 0 contact time, CFU | 200,000 | 200,000 |
| Treated Fabric, bacteria count at 24 hours contact time, CFU | <100 | 250,000 |

**Table 18:** Count of Klebsiella Pneumoniae (AATCC 4352) test bacteria recovered from the inoculated fabric.

| Example | Example 24 | Example 25 |
|---|---|---|
| Untreated Fabric (viability control), bacteria count at 0 contact time, CFU | 220,000 | 220,00 |
| Untreated Fabric (viability control) bacteria count at 24 hours contact time, CFU | 2,700,000 | 2,700,000 |
| Treated Fabric, bacteria count at 0 contact time, CFU | 220,000 | 220,000 |
| Treated Fabric, bacteria count at 24 hours contact time, CFU | <100 | 250,000 |

## Claims

1. **Polymer** comprising the following repeating unit I:

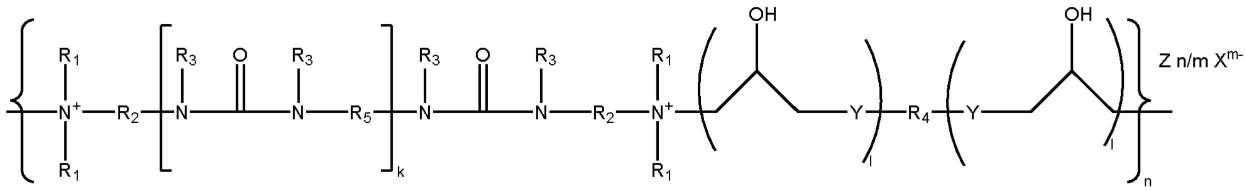

(I)

wherein:

- $R_1$ are each independently a hydrogen atom, a $C_1$ to $C_4$ alkyl or hydroxyalkyl group, or a $C_2$ to $C_4$ alkenyl group;
- $R_2$ are each independently a $C_2$ to $C_{10}$ alkylene group;
- $R_3$ are each independently a hydrogen atom, a $C_1$ to $C_4$ alkyl or hydroxyalkyl group, or a $C_2$ to $C_4$ alkenyl group;
- $R_4$ represents an oxyalkylene group of formula A:

$$(-CHR_6CH_2)_a-(OCH_2CHR_7)_b-(OCH_2CHR_8)_c-(OCH_2CHR_9)_d \qquad (A)$$

wherein

"a" represents 1;
"b" represents an integer of 1 or more;
"c" and "d" represent independently from one another an integer of 0 or more; and
$R_6$, $R_7$, $R_8$ and $R_9$ represent independently from one another a hydrogen atom or a $C_1$ to $C_4$ alkyl group;

- $R_5$ represents an alkylene group, an oxyalkylene group of formula A, a cycloalkylene group, or an arylene group, optionally substituted and/or interrupted by one or more heteroatoms or heteroatom containing groups;
- Y represents an oxygen atom, $-NR_{10}-$ or $-N^+R_{11}R_{12}-$ wherein

  - $R_{10}$ represents a hydrogen atom or a radical deriving from any electrophilic compound present in the reaction mixture during the synthesis process of the polymer and that reacted by alkylation reaction with a secondary amine (Y = -NH-) present on the polymer during its synthesis; and
  - $R_{11}$ and $R_{12}$ represent radicals deriving from any electrophilic compounds present in the reaction mixture during the synthesis process of the polymer and that reacted by successive alkylation reactions with a secondary amine (Y = -NH-) and then a tertiary amine (e.g. Y = $-NR_{11}-$) present on the polymer during its synthesis;

- k represents a positive integer from 1 to 20;
- l represents a positive integer being 0 or 1;
- Z represents a positive integer from 2 to 4;
- n represents a positive integer from 1 to 50
- m represents a positive integer from 1 to 3 and
- X represents an electrophilic group, preferably selected from halogens or sulfates.

2. The polymer according to claim 1, wherein

$R_1$ are $C_1$ alkyl groups;
$R_2$ are $C_2$ or $C_3$ alkylene group; and
$R_3$ are hydrogen atoms.

3. The polymer according to claim 1 or 2, wherein $R_5$ represents a $C_2$ to $C_6$ alkylene group or an arylene group substituted with carboxylic acid group.

4. The polymer according to any one of claim 1 to 3, wherein in formula I:

$R_4$ represents an oxyalkylene group of formula A

$$(-CHR_6CH_2)_a-(OCH_2CHR_7)_b-(OCH_2CHR_8)_c-(OCH_2CHR_9)_d \quad (A)$$

wherein

"a" represents 1;
"b" represents an integer of 1 or more and preferably up to 70;
"c" and "d" represent independently from one another an integer of 0 or more, preferably up to 70; and
$R_6$ is methyl or hydrogen, $R_7$ is hydrogen, $R_8$ is hydrogen or methyl and $R_9$ is methyl group;
l represents 1; and
Y represents an oxygen atom.

5. The polymer according to any one of claim 1 to 4, having a weight average molecular weight ranging from 1 to 100 kg/mol, preferably 2 to 50 kg/mol, wherein the weight average molecular weight is determined as disclosed in the description.

6. The polymer according to any one of claims 1 to 5, having a cationic charge density ranging from 0.1 to 5.4 mmol/g, preferably 0.6 to 5.2 mmol/g.

7. **Process** for preparing a polymer according to any one of claims 1 to 6, comprising a step (i) of reacting a compound of formula II:

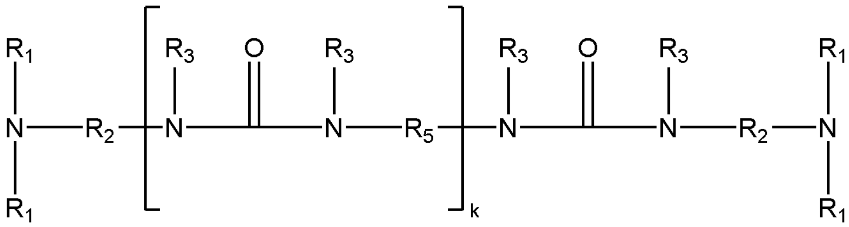
(II)

wherein

- $R_1$ are each independently a hydrogen atom, a $C_1$ to $C_4$ alkyl or hydroxyalkyl group, or a $C_2$ to $C_4$ alkenyl group;
- $R_2$ are each independently a $C_2$ to $C_{10}$ alkylene group;
- $R_3$ are each independently a hydrogen atom, a $C_1$ to $C_4$ alkyl or hydroxyalkyl group, or a $C_2$ to $C_4$ alkenyl group;
- $R_5$ represents an alkylene group, an oxyalkylene group of formula A, a cycloalkylene group, or an arylene group, optionally substituted and/or interrupted by one or more heteroatoms or heteroatom containing groups;
- k represents a positive integer from 1 to 20;

with a compound of formula III:

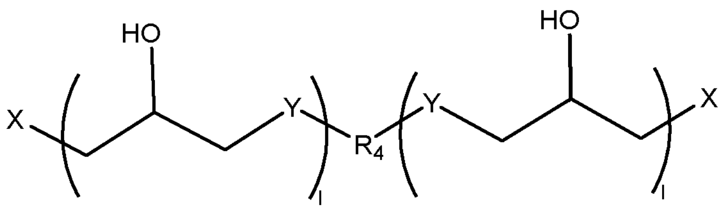
(III)

wherein

- $R_4$ represents an oxyalkylene group of formula A:

$$(-CHR_6CH_2)_a-(OCH_2CHR_7)_b-(OCH_2CHR_8)_c-(OCH_2CHR_9)_d \quad (A)$$

wherein

"a" represents 1;
"b" represents an integer of 1 or more;
"c" and "d" represent independently from one another an integer of 0 or more; and
$R_6$, $R_7$, $R_8$ and $R_9$ represent independently from one another a hydrogen atom or a $C_1$ to $C_4$ alkyl group;

- Y represents an oxygen atom, $-NR_{10}-$ or $-N^+R_{11}R_{12}-$ wherein

  - $R_{10}$ represents a hydrogen atom or a radical deriving from any electrophilic compound present in the reaction mixture during the synthesis process of the polymer and that reacted by alkylation reaction with a secondary amine (Y = -NH-) present on the polymer during its synthesis; and
  - $R_{11}$ and $R_{12}$ represent radicals deriving from any electrophilic compounds present in the reaction mixture during the synthesis process of the polymer and that reacted by successive alkylation reactions with a secondary amine (Y = -NH-) and then a tertiary amine (e.g. Y = $-NR_{11}-$) present on the polymer during its synthesis;

- l represents a positive integer being 0 or 1; and
- X represents an electrophilic group, preferably selected from halogens or sulfates;

thus leading to a polymer comprising repeating units of formula I as defined in any one of claims 1 to 6.

**8.** The process according to claim 7, wherein the molar ratio between the compound of formula II and the compound of formula III is ranging from 0.75 to 1.25, preferably from 0.90 to 1.10 and more preferably from 0.95 to 1.05.

**9.** The process according to any one of claim 7 or 8, wherein the compound of formula II is prepared by reaction of :

- a diamine of formula IV:

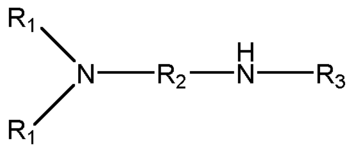

(IV)

wherein $R_1$, $R_2$ and $R_3$ are as defined in claim 7;
- with a diamine of formula IV':

$H_2N-R_5-NH_2$ (IV')

wherein $R_5$ is as defined in claim 7;
- and with urea of formula V $NH_2CONH_2$ (V);
- in a molar ratio IV:V:IV' of at least 1.9:1:0.05 to 0.4:1:0.8.

**10.** The process according to any one of claim 7 to 9, wherein the compound of formula III is prepared by reaction of a bifunctional compound of formula VI:

$HY-R_4-YH$ (VI)

wherein Y and $R_4$ are as defined in claim 7;
with on oxirane containing compound of formula VII:

$X-CH_2-CH(CH_2O)$ (VII),

wherein X is as defined in claim 7;
in presence of an acid catalyst and in a molar ratio VII:VI ranging from 1.8 to 2.1 of the molecule VII to 1 mol of

molecule VI, preferably 2:1.

11. The process according to any one of claim 7 to 10, wherein the compound of formula III is such that

• $R_4$ represents an oxyalkylene group of formula A :

$$(-CHR_6CH_2)_a-(OCH_2CHR_7)_b-(OCH_2CHR_8)_c-(OCH_2CHR_9)_d \quad (A)$$

wherein

"a" represents 1;
"b" represents an integer of 1 or more;
"c" and "d" represent independently from one another an integer of 0 or more; and
$R_6$ is methyl or hydrogen, $R_7$ is hydrogen, $R_8$ is hydrogen or methyl and $R_9$ is methyl;

• Y represents an oxygen atom; and
• X is Cl.

12. **Use** of the polymer according to any one of claims 1 to 6 in home and personal care applications, in industrial and institutional cleaning applications, or as anti-microbial agent in

a. laundry compositions;
b. hard surface cleaning compositions;
c. dish wash cleaning compositions; or
d. hair care compositions.

13. **Use** of the polymer according to any one of claims 1 to 6, as dye fixing agent or transfer inhibitor agent or soil anti-redeposition agent or soil release agent or laundry additives deposition agent in laundry compositions.

14. **Use** of the polymer according to any one of claims 1 to 6, as soil anti-redeposition agent or soil release agent or shining agent in dish wash compositions.

15. **Formulation** comprising

(i) a polymer as defined in any one of claims 1 to 6 or obtained by the process as defined in any one of claims 7 to 11;
(ii) and an adjuvant selected from a surfactant and/or a thickening agent.

## Patentansprüche

1. **Polymer** mit folgender Wiederholeinheit I:

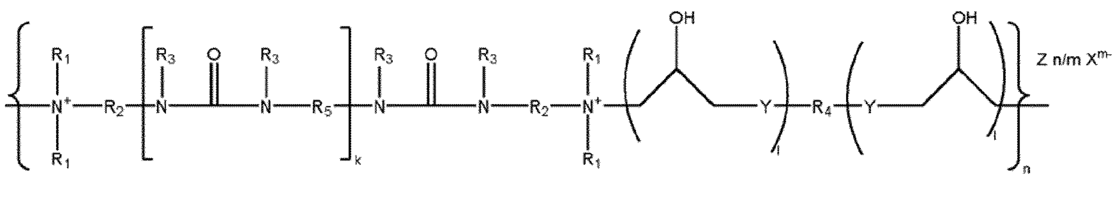

(I)

worin:

• R1 sind jeweils unabhängig voneinander ein Wasserstoffatom, eine C1- bis C4-Alkyl- oder Hydroxyalkylgruppe oder eine C2- bis C4-Alkenylgruppe;
• R2 sind jeweils unabhängig voneinander eine C2- bis C10-Alkylengruppe;
• R3 sind unabhängig voneinander jeweils ein Wasserstoffatom, eine C1- bis C4-Alkyl- oder Hydroxyalkylgruppe

oder eine C2- bis C4-Alkenylgruppe;
• R4 stellt eine Oxyalkylengruppe der Formel A dar:

$$(-CHR_6CH_2)_a-(OCH_2CHR_7)_b-(OCH_2CHR_8)_c-(OCH_2CHR_9)_d \text{ (A)}$$

worin

"a" steht für 1;
"b" steht für eine ganze Zahl von 1 oder mehr;
"c" und "d" stellen unabhängig voneinander eine ganze Zahl von 0 oder mehr dar;
und $R_6$, R7, R8 und R9 stellen unabhängig voneinander ein Wasserstoffatom oder eine C1 bis C4 Alkylgruppe dar;

• R5 stellt eine Alkylengruppe, eine Oxyalkylengruppe der Formel A, eine Cycloalkylengruppe oder eine Arylengruppe dar, die gegebenenfalls durch ein oder mehrere Heteroatome oder Heteroatome enthaltende Gruppen substituiert und/oder unterbrochen wird;
• Y stellt ein Sauerstoffatom -NR10- oder -N+R11R12- dar, wobei

• R10 stellt ein Wasserstoffatom oder einen Rest dar, der von einer elektrophilen Verbindung abgeleitet ist, die während des Syntheseprozesses des Polymers in dem Reaktionsgemisch vorhanden ist und die durch Alkylierungsreaktion mit einem sekundären Amin (Y= -NH-) reagiert hat, das während seiner Synthese auf dem Polymer vorhanden ist; und
• R11 und R12 stellen Reste dar, die von elektrophilen Verbindungen abgeleitet sind, die während des Syntheseprozesses des Polymers in dem Reaktionsgemisch vorhanden sind und die durch aufeinanderfolgende Alkylierungsreaktionen mit einem sekundären Amin reagiert haben (Y= -NH-) und dann ein tertiäres Amin (z. B. Y= -NR11-), das während seiner Synthese auf dem Polymer vorhanden ist;

• k steht für eine positive ganze Zahl von 1 bis 20;
• l steht für eine positive ganze Zahl, die 0 oder 1 ist;
• Z steht für eine positive ganze Zahl von 2 bis 4;
• n steht für eine positive ganze Zahl von 1 bis 50
• m steht für eine positive ganze Zahl von 1 bis 3 und
• X stellt eine elektrophile Gruppe dar, vorzugsweise ausgewählt aus Halogenen oder Sulfaten.

**2.** Polymer nach Anspruch 1, wobei

R1 sind C1-Alkylgruppen;
R2 sind C2- oder C3-
Alkylengruppen; und R3
sind Wasserstoffatome.

**3.** Polymer nach Anspruch 1 oder 2, wobei R5 eine C2- bis C6-Alkylengruppe oder eine mit Carbonsäure substituierte Arylengruppe darstellt.

**4.** Polymer nach einem der Ansprüche 1 bis 3, wobei in der Formel I:
R4 stellt eine Oxyalkylengruppe der Formel A dar

$$(-CHR6CH_2)_a-(OCH2CHR_7)_b-(OCH2CHR_8)_c-(OCH2CHR_9)_d \qquad \text{(A)}$$

worin

"a" steht für 1 ;
"b" stellt eine ganze Zahl von 1 oder mehr und vorzugsweise bis zu 70 dar;
"c" und "d" stellen unabhängig voneinander eine ganze Zahl von 0 oder mehr, vorzugsweise bis 70, dar; und
R6 ist Methyl oder Wasserstoff, R7 ist Wasserstoff, R8 ist Wasserstoff oder Methyl und R9 ist die Methylgruppe;
l steht für 1; und
Y steht für ein Sauerstoffatom.

5. Polymer nach einem der Ansprüche 1 bis 4 mit einem Gewichtsdurchschnittsmolekulargewicht von 1 bis 100 kg/mol, vorzugsweise 2 bis 50 kg/mol, wobei das mittlere Molekulargewicht gemäß der Beschreibung bestimmt wird.

6. Polymer nach einem der Ansprüche 1 bis 5 mit einer kationischen Ladungsdichte im Bereich von 0,1 bis 5,4 mmol/g, vorzugsweise 0,6 bis 5,2 mmol/g.

7. **Verfahren** zur Herstellung eines Polymers nach einem der Ansprüche 1 bis 6, umfassend einen Schritt (i) zum Umsetzen einer Verbindung der Formel II:

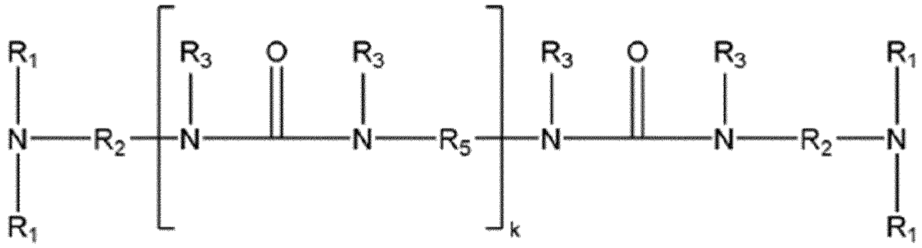

(II)

worin

- R1 sind jeweils unabhängig voneinander ein Wasserstoffatom, eine C1- bis C4-Alkyl- oder Hydroxyalkylgruppe oder eine C2- bis C4-Alkenylgruppe;
- R2 sind jeweils unabhängig voneinander eine C2- bis C10-Alkylengruppe;
- R3 sind unabhängig voneinander jeweils ein Wasserstoffatom, eine C1- bis C4-Alkyl- oder Hydroxyalkylgruppe oder eine C2- bis C4-Alkenylgruppe;
- R5 stellt eine Alkylengruppe, eine Oxyalkylengruppe der Formel A, eine Cycloalkylengruppe oder eine Arylengruppe dar, die gegebenenfalls durch ein oder mehrere Heteroatome oder Heteroatome enthaltende Gruppen substituiert und/oder unterbrochen wird;
- k steht für eine positive ganze Zahl von 1 bis 20; mit einer Verbindung der Formel III:

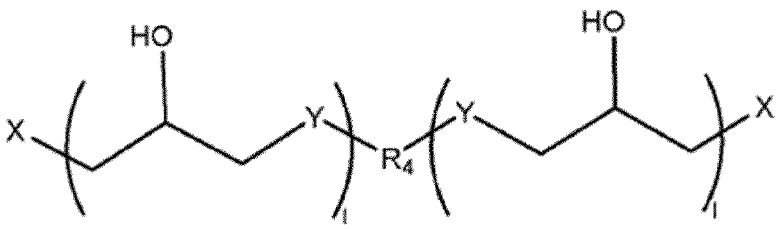

(III)

worin

- R4 stellt eine Oxyalkylengruppe der Formel A dar:

$$(-CHR_6CH_2)_a-(OCH_2CHR_7)_b-(OCH_2CHR_8)_c-(OCH_2CHR_9)_d \quad (A)$$

worin

"a" steht für 1;
"b" steht für eine ganze Zahl von 1 oder mehr;
"c" und "d" stellen unabhängig voneinander eine ganze Zahl von 0 oder mehr dar; und $R_6$, R7, R8 und R9 stellen unabhängig voneinander ein Wasserstoffatom oder eine C1 bis C4 Alkylgruppe dar;

- Y steht für ein Sauerstoffatom, -NR10- oder -N+R11R12-, wobei

  - R10 stellt ein Wasserstoffatom oder einen Rest dar, der von einer elektrophilen Verbindung abgeleitet ist, die während des Syntheseprozesses des Polymers in dem Reaktionsgemisch vorhanden ist und die

durch Alkylierungsreaktion mit einem sekundären Amin (Y= -NH-) reagiert hat, das während seiner Synthese auf dem Polymer vorhanden ist; und

- R11 und R12 stellen Reste dar, die von elektrophilen Verbindungen abgeleitet sind, die während des Syntheseprozesses des Polymers in dem Reaktionsgemisch vorhanden sind und die durch aufeinanderfolgende Alkylierungsreaktionen mit einem sekundären Amin (Y= -NH-) und dann einem tertiären Amin (z. B. Y= -NR11-) reagiert haben, das während seiner Synthese auf dem Polymer vorhanden ist;

  - I steht für eine positive ganze Zahl, die 0 oder 1 ist; und
  - X stellt eine elektrophile Gruppe dar, vorzugsweise ausgewählt aus Halogenen oder Sulfaten;

was zu einem Polymer führt, das sich wiederholende Einheiten der Formel I umfasst, wie sie in einem der Ansprüche 1 bis 6 definiert ist.

**8.** Verfahren nach Anspruch 7, wobei das molare Verhältnis zwischen der Verbindung der Formel II und der Verbindung der Formel III im Bereich von 0,75 bis 1,25, bevorzugt von 0,90 bis 1,10 und mehr bevorzugt von 0,95 bis 1,05 liegt.

**9.** Verfahren nach einem der Ansprüche 7 oder 8, wobei die Verbindung der Formel II durch Reaktion von hergestellt wird von:

- ein Diamin der Formel IV:

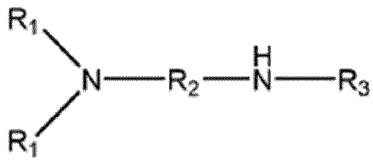

(IV)

wobei R1, R2 und R3 wie in Anspruch 7 definiert sind;
- mit einem Diamin der Formel IV":

$H_2N\text{-}R_5\text{-}NH_2$ (IV')|

wobei R5 wie in Anspruch 7 definiert ist;
- und mit Harnstoff der Formel V $NH_2CONH_2$ (V);
- in einem molaren Verhältnis IV:V:IV' von mindestens 1,9:1:0,05 bis 0,4:1:0,8.

**10.** Verfahren nach einem der Ansprüche 7 bis 9, wobei die Verbindung der Formel III durch Reaktion einer bifunktionellen Verbindung der Formel VI hergestellt wird:

$HY\text{-}R_4\text{-}YH$ (VI)|

wobei Y und R4 wie in Anspruch 7 definiert sind;
mit einer oxiranhaltigen Verbindung der Formel VII:

X-CH2CH(CH2O) (VII),

wobei X wie in Anspruch 7 definiert ist;
in Gegenwart eines sauren Katalysators und in einem molaren Verhältnis VII:VI von 1,8 bis 2,1 des Moleküls VII zu 1 mol des Moleküls VI, vorzugsweise 2:1.

**11.** Verfahren nach einem der Ansprüche 7 bis 10, wobei die Verbindung der Formel III derart ist, dass

· R4 stellt eine Oxyalkylengruppe der Formel A dar:

$$(-CHR_6CH_2)_a-(OCH_2CHR_7)_b-(OCH_2CHR_8)_c-(OCH_2CHR_9)_d \qquad (A)$$

worin

"a" steht für 1;
"b" steht für eine ganze Zahl von 1 oder mehr;
"c" und "d" stellen unabhängig voneinander eine ganze Zahl von 0 oder mehr dar, und $R_6$ ist Methyl oder Wasserstoff, R7 ist Wasserstoff, R8 ist Wasserstoff oder Methyl und R9 ist Methyl;

- Y steht für ein Sauerstoffatom; und
- X ist Cl.

**12.** Verwendung des Polymers gemäß einem der Ansprüche 1 bis 6 in Anwendungen im Bereich Haushalt und Körperpflege, in industriellen und institutionellen Reinigungsanwendungen oder als antimikrobielles Mittel in

a) Zusammensetzungen der Wäscherei;
b) Reinigungszusammensetzungen für harte Oberflächen;
c) Geschirrspülmittel-Reinigungszusammensetzungen; oder
d) Haarpflege-Kompositionen.

**13. Verwendung** des Polymers nach einem der Ansprüche 1 bis 6 als Farbstofffixiermittel oder Transferinhibitor oder Schmutzabscheidungsmittel oder Schmutztrennmittel oder Wäschezusätze Abscheidungsmittel in Wäschezusammensetzungen.

**14. Verwendung** des Polymers nach einem der Ansprüche 1 bis 6 als Bodenabscheidungsmittel oder Schmutztrennmittel oder Glanzmittel in Geschirrspülmittel.

**15. Formulierung,** umfassend

(i) Polymer nach einem der Ansprüche 1 bis 6 oder nach dem Verfahren nach einem der Ansprüche 7 bis 11 erhalten;
(ii) und ein Adjuvans, ausgewählt aus einem Tensid und/oder einem Verdickungsmittel.

## Revendications

**1.** Polymère comprenant l'unité répétitive I suivante :

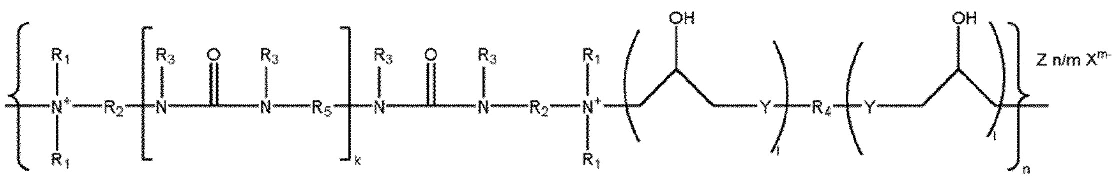

(I)

Où:

- R1 sont chacun indépendamment un atome d'hydrogène, un groupe alkyle ou hydroxyalkyle C1 à C4, ou un groupe alcényle C2 à C4 ;
- Les R2 sont chacun indépendamment un groupe alkylène C2 à C10 ;
- R3 sont chacun indépendamment un atome d'hydrogène, un groupe alkyle ou hydroxyalkyle C1 à C4, ou un groupe alcényle C2 à C4 ;
- R4 représente un groupe oxyalkylène de formule A :

$$(-CHR_6CH_2)_a-(OCH_2CHR_7)_b-(OCH_2CHR_8)_c-(OCH_2CHR_9)_d \quad (A)$$

Où

« a » représente 1 ;
« b » représente un entier de 1 ou plus ;
« c » et « d » représentent indépendamment l'un de l'autre un entier de 0 ou plus ;
et $R_6$, R7, R8 et R9 représentent indépendamment l'un de l'autre un atome d'hydrogène ou un groupe alkyle C1 à C4 ;

- R5 représente un groupe alkylène, un groupe oxyalkylène de formule A, un groupe cycloalkylène ou un groupe arylène, éventuellement substitué et/ou interrompu par un ou plusieurs hétéroatomes ou groupes contenant des hétéroatomes ;
- Y représente un atome d'oxygène, -NR10- ou-N+R11R12- dans lequel

  - R10 représente un atome d'hydrogène ou un radical dérivé de tout composé électrophile présent dans le mélange réactionnel lors du processus de synthèse du polymère et qui a réagi par réaction d'alkylation avec une amine secondaire (Y= -NH-) présente sur le polymère lors de sa synthèse ; et
  - R11 et R12 représentent des radicaux dérivés de tout composé électrophile présent dans le mélange réactionnel pendant le processus de synthèse du polymère et qui ont réagi par des réactions d'alkylation successives avec une amine secondaire
  (Y= -NH-) puis une amine tertiaire (ex : Y= -NR11-) présente sur le polymère lors de sa synthèse ;

- k représente un entier positif de 1 à 20 ;
- l représente un entier positif égal à 0 ou 1 ;
- Z représente un entier positif de 2 à 4 ;
- n représente un entier positif de 1 à 50
- m représente un entier positif de 1 à 3 et
- X représente un groupe électrophile, de préférence choisi parmi les halogènes ou les sulfates.

**2.** Polymère selon la revendication 1, dans lequel

R1 sont des groupes alkyles C1 ;
R2 sont des groupes
alkylène C2 ou C3 ; et R3
sont des atomes
d'hydrogène.

**3.** Polymère selon la revendication 1 ou 2, dans lequel R5 représente un groupe alkylène C2 à C6 ou un groupe arylène substitué par un groupe acide carboxylique.

**4.** Polymère selon l'une quelconque des revendications 1 à 3, dans lequel dans la formule I :
R4 représente un groupe oxyalkylène de formule A

$$(-CHR6CH_2)_a-(OCH2CHR_7)_b-(OCH2CHR_8)_c-(OCH2CHR_9)_d \quad (A)$$

Où

« a » représente 1 ;
« b » représente un entier de 1 ou plus et de préférence jusqu'à 70 ;
« c » et « d » représentent indépendamment l'un de l'autre un entier de 0 ou plus, de préférence jusqu'à 70 ; et
R6 est méthyle ou hydrogène, R7 est hydrogène, R8 est hydrogène ou méthyle et R9 est le groupe méthyle ;
I représente 1 ; et
Y représente un atome d'oxygène.

**5.** Polymère selon l'une quelconque des revendications 1 à 4, ayant un poids moléculaire moyen en poids allant de 1 à 100 kg/mol, de préférence de 2 à 50 kg/mol, dans lequel le poids moléculaire moyen en poids est déterminé tel que divulgué dans la description.

6. Polymère selon l'une quelconque des revendications 1 à 5, ayant une densité de charge cationique allant de 0,1 à 5,4 mmol/g, de préférence de 0,6 à 5,2 mmol/g.

7. Procédé de préparation d'un polymère selon l'une quelconque des revendications 1 à 6, comprenant une étape (i) de réaction d'un composé de formule II :

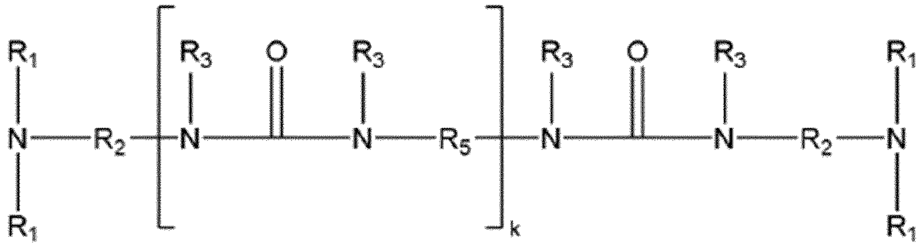
(II)

Où

• R1 sont chacun indépendamment un atome d'hydrogène, un groupe alkyle ou hydroxyalkyle C1 à C4, ou un groupe alcényle C2 à C4 ;
• Les R2 sont chacun indépendamment un groupe alkylène C2 à C10 ;
• R3 sont chacun indépendamment un atome d'hydrogène, un groupe alkyle ou hydroxyalkyle C1 à C4, ou un groupe alcényle C2 à C4 ;
• R5 représente un groupe alkylène, un groupe oxyalkylène de formule A, un groupe cycloalkylène ou un groupe arylène, éventuellement substitué et/ou interrompu par un ou plusieurs hétéroatomes ou groupes contenant des hétéroatomes ;
• k représente un entier positif de 1 à 20 ; avec un composé de formule III :

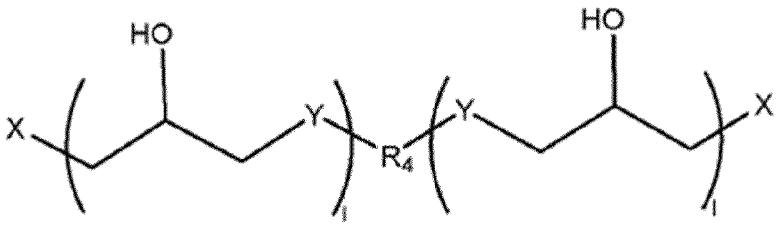
(III)

Où

• R4 représente un groupe oxyalkylène de formule A :

$$(-CHR_6CH_2)_a-(OCH_2CHR_7)_b-(OCH_2CHR_8)_c-(OCH_2CHR_9)_d \qquad (A)$$

Où

« a » représente 1 ;
« b » représente un entier de 1 ou plus ;
« c » et « d » représentent indépendamment l'un de l'autre un entier de 0 ou plus ; et $R_6$, R7, R8 et R9 représentent indépendamment l'un de l'autre un atome d'hydrogène ou un groupe alkyle C1 à C4 ;

• Y représente un atome d'oxygène, -NR10- ou -N+R11R12- dans lequel

• R10 représente un atome d'hydrogène ou un radical dérivé de tout composé électrophile présent dans le mélange réactionnel lors du processus de synthèse du polymère et qui a réagi par réaction d'alkylation avec une amine secondaire (Y= -NH-) présente sur le polymère lors de sa synthèse ; et

• R11 et R12 représentent des radicaux dérivés de tout composé électrophile présent dans le mélange réactionnel pendant le processus de synthèse du polymère et qui ont réagi par des réactions d'alkylation

successives avec une amine secondaire (Y= -NH-) puis une amine tertiaire (par exemple Y= -NR11-) présente sur le polymère lors de sa synthèse ;

- I représente un entier positif égal à 0 ou 1 ; et
- X représente un groupe électrophile, de préférence choisi parmi les halogènes ou les sulfates ;

conduisant ainsi à un polymère comprenant des unités répétitives de formule I telles que définies dans l'une quelconque des revendications 1 à 6.

**8.** Procédé selon la revendication 7, dans lequel le rapport molaire entre le composé de formule II et le composé de formule III varie de 0,75 à 1,25, de préférence de 0,90 à 1,10 et plus préférablement de 0,95 à 1,05.

**9.** Procédé selon l'une quelconque des revendications 7 ou 8, dans lequel le composé de formule II est préparé par réaction de :

- une diamine de formule IV :

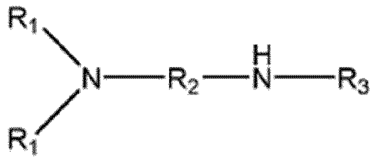

(IV)

dans laquelle R1, R2 et R3 sont tels que définis dans la revendication 7 ;

- avec une diamine de formule IV' :

$H_2N-R_5-NH_2$ (IV')|

où R5 est tel que défini dans la revendication 7 ;
- et avec de l'urée de formule V $NH_{2CONH2}$ (V) ;
- dans un rapport molaire IV :V :IV' d'au moins 1,9:1:0,05 à 0,4:1:0,8.

**10.** Procédé selon l'une quelconque des revendications 7 à 9, dans lequel le composé de formule III est préparé par réaction d'un composé bifonctionnel de formule VI :

$HY-R_4-YH$ (VI)|

où Y et R4 sont tels que définis dans la revendication 7 ;
avec un composé contenant de l'oxirane de formule VII :

X-CH2CH(CH2O) (VII),

dans laquelle X est tel que défini dans la revendication 7 ;
en présence d'un catalyseur acide et dans un rapport molaire VII :VI allant de 1,8 à 2,1 de la molécule VII à 1 mol de la molécule VI, de préférence 2:1.

**11.** Procédé selon l'une quelconque des revendications 7 à 10, dans lequel le composé de formule III est tel que

- R4 représente un groupe oxyalkylène de formule A :

$(-CHR_6CH_2)_a-(OCH_2CHR_7)_b-(OCH_2CHR_8)_c(OCH_2CHR_9)_d$ (A)

Où

« a » représente 1 ;
« b » représente un entier de 1 ou plus ;
« c » et « d » représentent indépendamment l'un de l'autre un entier de 0 ou plus ; et $R_6$ est méthyle ou hydrogène, R7 est hydrogène, R8 est hydrogène ou méthyle et R9 est méthyle ;

- Y représente un atome d'oxygène ; et
- X est Cl.

**12.** Utilisation du polymère selon l'une quelconque des revendications 1 à 6 dans des applications pour l'entretien de la maison et les soins personnels, dans des applications de nettoyage industriel et institutionnel, ou en tant qu'agent antimicrobien dans des

a) compositions de lessive ;
b) compositions de nettoyage des surfaces dures ;
c) compositions de nettoyage pour lave-vaisselle ; ou
d) compositions de soins capillaires.

**13.** Utilisation du polymère selon l'une quelconque des revendications 1 à 6, comme agent de fixation des colorants, agent inhibiteur de transfert, agent anti-redéposition des salissures, agent de libération des salissures ou agent de dépôt d'additifs de lavage dans des compositions pour lessive.

**14.** Utilisation du polymère selon l'une quelconque des revendications 1 à 6, comme agent anti-redéposition des salissures, agent de libération des salissures ou agent de brillance dans des compositions pour lavage de la vaisselle.

**15.** **Formulation** comprenant

(i) un polymère tel que défini dans l'une quelconque des revendications 1 à 6 ou obtenu par le procédé tel que défini dans l'une quelconque des revendications 7 à 11 ;
(ii) et un adjuvant choisi parmi un tensioactif et/ou un épaississant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 21215379
- WO 11148950 A1
- US 20090005286 A1


### Non-patent literature cited in the description


- **CHEN, C.** ; **ZHU, X.** ; **WEN, X. et al.** Coupling N2 and CO2 in H2O to synthesize urea under ambient conditions.. *Nat. Chem.*, 2020, vol. 12, 717-724, https://doi.org/10.1038/s41557-020-0481-9
- **M.W. SPEARS**. *The Column*, 2016, vol. 12 (11), 18-21
- *CHEMICAL ABSTRACTS*, 161074-97-1
- *CHEMICAL ABSTRACTS*, 68131-39-5
- *CHEMICAL ABSTRACTS*, 68439-45-2
- *CHEMICAL ABSTRACTS*, 68439-46-3
- *CHEMICAL ABSTRACTS*, 9005-65-6
- *CHEMICAL ABSTRACTS*, 9005-67-8
- *CHEMICAL ABSTRACTS*, 9005-66-7
- *CHEMICAL ABSTRACTS*, 9005-64-5
- *CHEMICAL ABSTRACTS*, 68603-42-9
- *CHEMICAL ABSTRACTS*, 57-13-6
- *CHEMICAL ABSTRACTS*, 124-09-3
- *CHEMICAL ABSTRACTS*, 109-55-7
- *CHEMICAL ABSTRACTS*, 109-76-2
- *CHEMICAL ABSTRACTS*, 107-15-3
- *CHEMICAL ABSTRACTS*, 25322-68-3
- *CHEMICAL ABSTRACTS*, 83713-18-5
- *CHEMICAL ABSTRACTS*, 111-44-4
- *CHEMICAL ABSTRACTS*, 112-26-5
- *CHEMICAL ABSTRACTS*, 638-56-2
- *CHEMICAL ABSTRACTS*, 106-89-8
- *CHEMICAL ABSTRACTS*, 1493-13-6
- *CHEMICAL ABSTRACTS*, 68555-36-5